# EUROPEAN PATENT APPLICATION

(11) **EP 4 529 961 A1**
(43) Date of publication of application: **02.04.2025**
(21) Application number: 23896158.5
(22) Date of filing: 31.08.2023
(51) Int. Cl.: A63F 13/49, A63F 13/533, A63F 13/2145, G06F 3/04817, G06F 3/04847, G06F 3/0488

(54) **GAME MANAGEMENT METHOD AND TERMINAL DEVICE**

(30) Priority: 28.11.2022 CN 202211501369
(71) Applicant: Honor Device Co., Ltd., Shenzhen, Guangdong 518040 (CN)
(72) Inventor: XU, Min, Shenzhen, Guangdong 518040 (CN); WU, Hao, Shenzhen, Guangdong 518040 (CN); XIAO, Liang, Shenzhen, Guangdong 518040 (CN); AN, Yu, Shenzhen, Guangdong 518040 (CN); CHE, Lixin, Shenzhen, Guangdong 518040 (CN)
(74) Representative: Gill Jennings & Every LLP
(86) International application number: PCT/CN2023/116019
(87) International publication number: WO 2024/113999

(57) **Abstract**

Provided are a method for managing a game, and a terminal device, which belong to the technical field of electronic devices. The method includes: by designing a game service application having dynamic game identification, double-entrance centralized management and intelligent function layout functions, a user can centrally manage and set a native game at an out-of-game entrance, and support a personalized setting of a single game. When the user enters the game, after dynamically identifying a game application, a background will start a game service application, and the game service application can be folded on a side of a page in a form of a suspended ball. In the game, function panels of the game service application will be intelligently arranged according to a last setting of the user and/or a type of the terminal device, so as to provide the user with a function layout more satisfying requirements, and create rapid, convenient and uninterrupted usage experience.

## Description

The disclosure claims the benefit of priority to Chinese Patent Application No. 202211501369.1, filed with the China National Intellectual Property Administration on November 28, 2022 and entitled "METHOD FOR MANAGING GAME, AND TERMINAL DEVICE", which is incorporated in its entirety herein by reference.

### TECHNICAL FIELD

The disclosure relates to the technical field of electronic devices, and particularly relates to a method for managing a game, and a terminal device.

### BACKGROUND

As the game market further expands, players put forwards increasingly high requirements on game experience in a mobile scenario, which includes a network speed, a game frame rate, picture display, etc. In the mobile scenario, a game may lag due to an unstable network, or a player may receive a pop-up message, an application notification, etc. in a game. These cases will interfere an operation of the player and affect immersive experience of the player.

Therefore, how to enable a player to acquire immersive experience that is less prone to be disturbed by other factors in a game scenario becomes a problem deserving attention.

### SUMMARY

Embodiments of the disclosure provide a method for managing a game, and a terminal device. By setting a game application service integrated with functions such as dynamic game identification, game setting double entrances, and an intelligent layout, a problem that a user is prone to be disturbed in a game, resulting in poor immersive experience is solved.

According to a first aspect, a method for managing a game is provided. The method is applied to a terminal device and includes:
displaying, when a first application is run, a first application interface of the first application, where the first application interface includes a first setting card of a first game application, and the first setting card includes setting controls corresponding to one or more functions supported by the first game application;
setting a first function as a target state in response to a first operation inputted by a user for a first setting control in the first setting card, where the first function corresponds to the first setting control;
displaying a second application interface of the first application when a second operation inputted by the user on the first application interface is detected, where the second application interface includes a second setting card of the second game application, and the second setting card includes setting controls corresponding to one or more functions supported by the second game application; where the first game application and the second game application are any two of a plurality of game applications managed by the first application;
displaying a first game interface of the first game application when the first game application is run, where the first game interface includes a first control; and
displaying a first setting panel when it is detected that the user enters a third operation for the first control, where the first setting panel includes a second setting control, and the second setting control indicates that the first function is the target state.

In a possible implementation, the first application may correspond to a game service application. The game service application may also be described as a GAME MANAGER, a game service manager, a game key, etc. The game service application may have functions of dynamically identifying a game application, enabling a user to centrally manage and set a native game at an out-of-game entrance, and performing an intelligent layout on game function controls.

In a possible implementation, the first setting control may be the same as or different from the second setting control. The first setting control and the second setting control are both configured to receive a setting operation of the user such that the terminal device can change a state (such as an enabled state or a disabled state) of a game function. However, specific presentation forms of the first setting control and the second setting control on an interface may be different. For example, the first setting control may be in a form of an elliptical button, and the second setting control may be in a form of a rectangular button. The expression that the first setting control is different from the second setting control may specifically means that forms, styles or rendering effects in which the first setting control and the second setting control are presented to the user are different.

In some possible implementations, the first setting panel may include a setting control corresponding to the first game application. A type of the setting control in the first setting panel may be consistent with a type of the setting control corresponding to the first game application in the first application. A specific presentation form of the setting control in the first setting panel may correspond to a function icon introduced below.

According to the method for managing a game provided in the implementation, by means of the game service application dynamically identifying a game and centrally managing the game, a user can centrally manage and set a native game at an out-of-game entrance. Moreover, a personalized setting of a single game is supported such that the user can acquire a game setting entrance and set the game out of the game. Thus, the game can be prevented from being interrupted, and immersive experience of the user in the game is improved.

In combination with the first aspect, in some implementations of the first aspect, one or more functions corresponding to the first game are different from one or more functions corresponding to the second game.

In combination with the first aspect, in some implementations of the first aspect, when the second game application is run, a second game interface of the second game application is displayed. The second game interface includes the first control.

A second setting panel is displayed when it is detected that the user enters a fourth operation for the first control. A type of a setting control included in the second setting panel is different from a type of a setting control included in the first setting panel.

According to the method for managing a game provided in the implementation, different game applications may correspond to different functions, and setting panels of different game applications may also display different setting controls for different games. In this way, different games can be flexibly set.

In combination with the first aspect, in some implementations of the first aspect, when a first trigger event is acquired, it is identified that the first game is an application of a game type. The first game application is associated with the first trigger event.

The first game application is added to the first application.

In a possible implementation, the first trigger event may be, for example, that the first application is downloaded in the terminal device, or the first application is installed in the terminal device.

According to the method for managing a game provided in the implementation, by adding a native game application downloaded or installed in the terminal device to the game application service, the user can centrally manage and set the native game at the out-of-game entrance. Thus, a game can be prevented from being interrupted, and immersive experience of the user in the game is improved.

In combination with the first aspect, in some implementations of the first aspect, the first control is a suspended ball.

According to the method for managing a game provided in the implementation, by displaying a suspended ball serving as a setting entrance in a running process of the game application, a hidden setting entrance can be provided for the user to set a game when needed. Thus, a real-time game setting requirement of the user is satisfied on the basis that game experience of the user is ensured.

In combination with the first aspect, in some implementations of the first aspect, the method further includes:
traversing, when a second trigger event is acquired, a plurality of applications included in the terminal device, and identifying an application of a game type from the plurality of applications;
generating a game list according to the application of the game type of the plurality of applications; and
running a first game in a case that the first game is detected on the game list.

In a possible implementation, the plurality of applications in the terminal device may include applications currently installed in the terminal device.

According to the method for managing a game provided in the implementation, by scanning applications in the terminal device and identifying the game application therefrom, the game service application can be rapidly started for the game application after the game application is started. Thus, game experience of the user can be improved.

In combination with the first aspect, in some implementations of the first aspect, the first game interface further includes a game display card corresponding to the first game application, and the second application interface further includes a game display card corresponding to the second game. In a case that the first application includes a plurality of game display cards corresponding to the plurality of games respectively, the method further includes:
switching, in response to a fifth operation input by the user, an application interface including different game display cards until the second application interface is displayed; or
displaying, in response to a sixth operation input by the user, the different game display cards in sequence in a preset form until the game display card corresponding to the second game application is displayed.

In combination with the first aspect, in some implementations of the first aspect, the fifth operation or the sixth operation includes any one of:
a slide-left operation, a slide-right operation, a slide-up operation and a slide-down operation.

In combination with the first aspect, in some implementations of the first aspect, the first setting card is displayed when a seventh operation input by the user is detected.

In combination with the first aspect, in some implementations of the first aspect, the game display card further includes a one-click installation control corresponding to a game.

In an implementation, the user may one-click install, by means of an installation control in the game service application, a game application downloaded but not installed.

In combination with the first aspect, in some implementations of the first aspect, the method further includes:
synchronizing, when the user sets the first function of the first game as the target state in the first application, the target state of the first function to the second setting control in the first setting panel, and indicating by the second setting control that the first function is the target state.

In combination with the first aspect, in some implementations of the first aspect, the method further includes:
synchronizing, when the user sets a second function of the first game by means of the setting panel and acquires a target state of the second function, the target state of the second function to the first setting control included in a setting card, and indicating by the first setting control that the first function is the target state.

In combination with the first aspect, in some implementations of the first aspect, the method further includes:
determining, when the first game application is run again, that a function state indicated by one or more setting controls included in the re-displayed first setting panel is consistent with a function state when the first game application is exited last time.

In a possible implementation, the terminal device may have a memory effect on a set function state. After the first application exits, the terminal device may record final set states corresponding to functions in the setting panel when the first application exits. Then, when the first application runs again, the set states corresponding to the functions in the setting panel may be maintained to be consistent with final set states during exit last time.

According to the method for managing a game provided in the implementation, after a player completes setting of a game, a background reads a final set state when the user exits the game. When the player enters the game next time, a corresponding function is automatically enabled. Thus, a usage habit of the player can be intelligently matched, repeated operations can be prevented, and operation cost of the player can be reduced.

In combination with the first aspect, in some implementations of the first aspect, the method further includes:
reading the type of the terminal device, where different types and functions have a corresponding relationship;
acquiring, according to the type of the terminal device and the corresponding relationship, that the terminal device does not support a third function;
deleting, in a case that a setting panel includes the third function, a setting control corresponding to the third function from the setting panel; and
moving forwards, in sequence, positions of setting controls corresponding to other functions behind a position of the setting control corresponding to the third function.

According to the method for managing a game provided in the implementation, by using an adaptive function layout, a situation that a user cannot enable a function in terminal devices of different types can be prevented, and a better function arrangement can be always maintained compared with a fixed layout.

In combination with the first aspect, in some implementations of the first aspect, the method further includes:
acquiring first game information corresponding to a plurality of games from a cloud server, where the first game information includes one or more of data packet names corresponding to the plurality of games, identifiers of the games, and features of the games;
acquiring second game information corresponding to a native game in the terminal device, where the second game information includes one or more of a data packet name corresponding to the native game, an identifier of the game, and a feature of the game;
detecting, when the first trigger event is acquired, whether information corresponding to the first application conforms to the first game information and/or the second game information; and
identifying, if yes, that the first game is a game application.

In combination with the first aspect, in some implementations of the first aspect, the method further includes:
acquiring a preset identification feature, where the identification feature is used to identify the application of the game type;
detecting, when the first trigger event is acquired, whether the information corresponding to the first game includes the identification feature; and
identifying, if yes, that the first game is the game application.

In combination with the first aspect, in some implementations of the first aspect, the method further includes:
enabling a game application identification function when the second trigger event is acquired.

In combination with the first aspect, in some implementations of the first aspect, the second trigger event includes:
the terminal device starts up, and a start-up broadcast is received; or
an enabling operation inputted by the user for a switch control corresponding to a game identification function is received; or
a new application is installed on the terminal device, and an application installation broadcast is received.

In combination with the first aspect, in some implementations of the first aspect, the first trigger event is that the first application is installed.

According to a second aspect, a terminal device is provided. The terminal device includes: one or more processors; and one or more memories. The one or more memories store one or more computer programs. The one or more computer programs include instructions. When executed by the one or more processors, the instructions cause the terminal device to perform a method described in any implementation in the above first aspect.

According to a third aspect, a computer-readable storage medium is provided. The computer-readable storage medium stores computer-executable program instructions. When run on a computer, the computer-executable program instructions cause the computer to perform a method described in any implementation in the above first aspect.

According to a fourth aspect, a computer program product is provided. The computer program product includes a computer program code. When running on a computer, the computer program code causes the computer to a method described in any implementation in the above first aspect.

### BRIEF DESCRIPTION OF DRAWINGS

FIG. 1 is a schematic structural diagram of a terminal device 100 according to an embodiment of the disclosure.
FIG. 2 is a block diagram of a software structure of a terminal device 100 according to an embodiment of the disclosure.
FIG. 3A-FIG. 3I are schematic diagrams of some GUIs which may be involved in an implementation process of a method for managing a game according to an embodiment of the disclosure.
FIG. 4A-FIG. 4C are schematic diagrams of related GUIs which may be involved in an implementation process of another method for managing a game according to an embodiment of the disclosure.
FIG. 5A-FIG. 5D are schematic diagrams of related GUIs which may be involved in an implementation process of yet another method for managing a game according to an embodiment of the disclosure.
FIG. 6A and FIG. 6B are schematic diagrams of related GUIs which may be involved in an implementation process of still another method for managing a game according to an embodiment of the disclosure.
FIG. 7 is a schematic flow diagram of a method for managing a game according to an embodiment of the disclosure.
FIG. 8 is a schematic flow diagram of another method for managing a game according to an embodiment of the disclosure.
FIG. 9 is a schematic flow diagram of yet another method for managing a game according to an embodiment of the disclosure.

### DESCRIPTION OF EMBODIMENTS

It should be noted that terms used in implementations of embodiments of the disclosure are merely used to explain particular embodiments of the disclosure, but are not intended to limit the disclosure. In the descriptions of the embodiments of the disclosure, "/" means "or" unless otherwise specified. For example, A/B may represent A or B. The term "and/or" herein describes merely an association relationship of associated objects, and indicates that there can be three relationships. For instance, A and/or B can represent A alone, both A and B, and B alone. In addition, in the descriptions of embodiments of the disclosure, unless otherwise specified, "a plurality of" means two or above, and "at least one" and "one or more" mean one and two or above.

The terms "first" and "second" are used merely for the purpose of description below, and shall not be construed as indicating or implying relative importance or implying a quantity of indicated technical features. Therefore, a feature limited by "first" or "second" may explicitly or implicitly include one or more of the features.

Reference to "an embodiment" or "some embodiments" described in the description means that a specific characteristic, structure or feature described in combination with the embodiment is included in one or more embodiments of the disclosure. Therefore, phrases "in an embodiment", "in some embodiments", "in some other embodiments", "in some additional embodiments", etc. described in different places in the description do not mean that all certainly refer to the same embodiment, but mean "one or more but not all of embodiments", unless otherwise specifically emphasized. The terms "include", "comprise", "provided with" and their variants all mean "including but not limited to", unless otherwise specifically emphasized.

In combination with the instructions in the background art, current solutions of game application services have problems as follows: (1) A game newly downloaded cannot be found by a user in time. For example, a player newly downloads a game, but a background does not identify the new game. As a result, the player cannot find the game and cannot use a setting entrance of a game service application. (2) The player generally focuses on a game operation after entering the game, and it is difficult to have excessive time and efforts to think and operate function settings. Therefore, in a scenario that setting and management are supported only in a game, it is difficult for the player to acquire immersive game experience. (3) In the game, requirements of the player for enhancing a game service may be different due to a mobile phone type, individual preference, etc. However, some game situations that only a fixed function layout is provided cannot satisfy personalized requirements of the player.

In view of the above problems, an embodiment of the disclosure provides a method for managing a game. By designing a game service application having dynamic game identification, double-entrance centralized management and intelligent function layout functions, a user can centrally manage and set a native game at an out-of-game entrance, and support a personalized setting of a single game. When the user enters the game, after dynamically identifying a game application, a background will start a game service application, and the game service application can be folded on a side of a page in a form of a suspended ball. In the game, function panels of the game service application will be intelligently arranged according to a last setting of the user and/or a type of the terminal device, so as to provide the user with a function layout more satisfying requirements, and create rapid, convenient and uninterrupted usage experience.

The method for managing a game provided in an embodiment of the disclosure may be applied to a game scenario, and particularly may be applied to a scenario that a user plays a game by means of a terminal device.

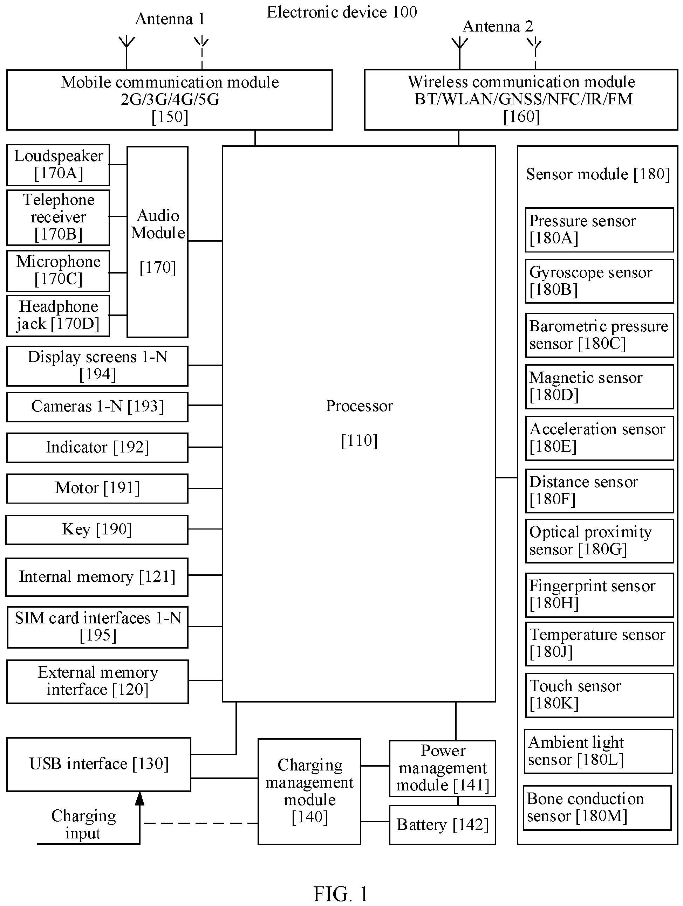

For example, as shown in FIG. 1, a schematic structural diagram of a terminal device 100 according to an embodiment of the disclosure is shown. The terminal device 100 may be a terminal device having a display screen.

The terminal device 100 may be various types of electronic devices, such as a mobile phone, a tablet computer, a wearable device, a notebook computer, a desktop computer, a netbook, a personal digital assistant (personal digital assistant, PDA), etc. A type of the terminal device is not limited in an embodiment of the disclosure.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, and a subscriber identification module (subscriber identification module, SIM) card interface 195. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, etc.

It can be understood that the structure illustrated in an embodiment of the disclosure does not constitute a specific limitation to the terminal device 100. In some other embodiments of the disclosure, the terminal device 100 may include more or fewer components than those shown in the figures, combine some components, split some components, or have different component arrangements. The components shown in the figures may be implemented as hardware, software, or their combinations.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated to one or more processors.

The controller may be a nerve center and a command center of the terminal device 100. The controller may generate an operation control signal according to an instruction operation code and a time-sequence signal, and control acquirement and execution of instructions.

A memory may be further arranged in the processor 110 and is configured to store instructions and data. In some embodiments, the memory in the processor 110 is a buffer memory. The memory may store instructions or data recently used or cyclically used by the processor 110. If the processor 110 needs to use the instructions or data again, the processor may directly call the instructions or the data from the memory. Repeated access is prevented, and waiting time of the processor 110 is reduced such that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identifier module (subscriber identity module, SIM) interface, and/or a universal serial bus (universal serial bus, USB) interface, etc.

It can be understood that an interface connection relationship between modules illustrated in an embodiment of the disclosure is merely a schematic description, and does not constitute a limitation on a structure of the terminal device 100. In some other embodiments of the disclosure, the terminal device 100 may use an interface connection method different from that in the above embodiment, or use a combination of a plurality of interface connection methods.

The charging management module 140 is configured to receive charging input from a charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input by means of a wireless charging coil of the terminal device 100. The charging management module 140 may supply power to the terminal by means of the power management module 141 while charging the battery 142.

The power management module 141 is configured to be connected to the battery 142, the charging management module 140 and the processor 110. The power management module 141 receives input from the battery 142 and/or the charging management module 140, and supplies power to the processor 110, the internal memory 121, the external memory, the display screen 194, the camera 193, the wireless communication module 160, etc. The power management module 141 may be further configured to monitor parameters such as a battery capacity, a battery cycle count, and a battery health state (leakage and impedance). In some other embodiments, the power management module 141 may be arranged in the processor 110. In some other embodiments, the power management module 141 and the charging management module 140 may be also arranged in the same device.

A wireless communication function of the terminal device 100 may be implemented by means of the antenna 1, the antenna 2, the mobile communication module 150, the wireless communication module 160, the modem processor, the baseband processor, etc.

The antenna 1 and the antenna 2 are configured to transmit and receive an electromagnetic wave signal. Each antenna in the terminal device 100 may be configured to cover one or more communication frequency bands. Different antennas may be further multiplexed such that an utilization rate of the antennas can be improved. For example, the antenna 1 may be multiplexed into a diversity antenna of a wireless local area network. In some other embodiments, the antennas may be used in combination with a tuning switch.

The mobile communication module 150 can provide a solution for wireless communication including 2G/3G/4G/5G, etc. applied to the terminal device 100. The mobile communication module 150 may include at least one filter, a switch, a power amplifier, a low noise amplifier (low noise amplifier, LNA), etc. The mobile communication module 150 may receive an electromagnetic wave by the antenna 1, filter and amplify the received electromagnetic wave, etc., and transmit the electromagnetic wave to the modem for demodulation. The mobile communication module 150 may further amplify a signal modulated by the modem, and convert the signal to an electromagnetic wave by the antenna 1 for radiation. In some embodiments, at least some function modules of the mobile communication module 150 may be arranged in the processor 110. In some embodiments, at least some function modules of the mobile communication module 150 may be arranged in the same device as at least some modules of the processor 110.

The modem may include a modulator and a demodulator. The modulator is configured to modulate a to-be-transmitted low-frequency baseband signal to a medium-high-frequency signal. The demodulator is configured to demodulate the received electromagnetic wave signal to a low-frequency baseband signal. Then the demodulator transfers the low-frequency baseband signal acquired through demodulation to a baseband processor for processing. The low-frequency baseband signal is processed by the baseband processor and then transferred to an application processor. The application processor outputs a sound signal by means of an audio device (which is not limited to the speaker 170A, the telephone receiver 170B, etc.), or displays an image or a video by means of the display screen 194. In some embodiments, the modem may be an independent device. In some other embodiments, the modem may be independent of the processor 110, and is arranged in the same device as the mobile communication module 150 or other function modules.

The wireless communication module 160 may provide solutions for wireless communication applied to the terminal device 100 and including wireless local area networks (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and infrared (infrared, IR). The wireless communication module 160 may be one or more devices that integrate at least one communication processing module. The wireless communication module 160 receives an electromagnetic wave by means of the antenna 2, modulates a frequency of the electromagnetic wave signal and filters the electromagnetic wave signal, and transmits a processed signal to the processor 110. The wireless communication module 160 may further receive a to-be-transmitted signal from the processor 110, modulate a frequency of the to-be-transmitted signal, amplify the to-be-transmitted signal, and convert the to-be-transmitted signal to an electromagnetic wave by means of the antenna 2 for radiation.

In some embodiments, in the terminal device 100, the antenna 1 is coupled to the mobile communication module 150, and the antenna 2 is coupled to the wireless communication module 160 such that the terminal device 100 can be in communication with a network and other devices by means of a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, etc. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS) and/or satellite based augmentation systems (satellite based augmentation systems, SBAS).

The terminal device 100 implements a display function by means of the GPU, the display screen 194, the application processor, etc. The display screen 194 is configured to display an image, a video, etc.

The terminal device 100 may implement a photographing function by means of the ISP, the camera 193, the video codec, the GPU, the display screen 194, the application processor, etc.

The digital signal processor is configured to process a digital signal, and in addition to a digital image signal, the digital signal processor may further process another digital signal. For example, when the terminal device 100 performs frequency point selection, the digital signal processor is configured to perform Fourier transformation, etc. on frequency point energy. The video codec is configured to compress or decompress a digital video. The NPU is a neural-network (neural-network, NN) processing unit, rapidly processes input information by referring to a structure of a biological neural network, such as a transmission mode between neurons in a human brain, and may further continuously perform self-learning.

The external memory interface 120 may be configured to be connected to an external memory card, such as a Micro SD card, such that a storage capacity of the terminal device 100 can be extended. The external memory card is in communication with the processor 110 through the external memory interface 120 such that data can be stored. For example, files such as music and video are stored in the external memory card. The internal memory 121 may be configured to store a computer-executable program code, and the executable program code includes instructions.

The terminal device 100 can implement an audio function by means of the audio module 170, the speaker 170A, the phone receiver 170B, the microphone 170C, the headset jack 170D, the application processor, etc. For example, the terminal device can implement music playback and sound recording.

The pressure sensor 180A is configured to sense a pressure signal, and can convert the pressure signal into an electrical signal. The gyroscope sensor 180B may be configured to determine a moving posture of the terminal device 100. The magnetic sensor 180D includes a Hall sensor. The terminal device 100 may detect opening and closing of a flip leather case by means of the magnetic sensor 180D. The acceleration sensor 180E may detect magnitude of accelerations in various directions (generally on three axes) of the terminal device 100. A magnitude and a direction of gravity may be measured and detected when the terminal device 100 is static. The acceleration sensor may be further configured to identify a posture of the terminal, and is applied to a switch between a landscape and a portrait, and applications such as a pedometer. The optical proximity sensor 180G may include, for example, a light emitting diode (LED) and an optical detector, such as a photodiode. The light-emitting diode may be an infrared light-emitting diode. The terminal device 100 emits infrared light by means of the light emitting diode. The ambient light sensor 180L is configured to sense ambient light brightness. The terminal device 100 may adaptively adjust brightness of the display screen 194 on the basis the sensed ambient light brightness. The fingerprint sensor 180H is configured to acquire a fingerprint. The temperature sensor 180J is configured to detect a temperature. The touch sensor 180K is also referred to as a "touch panel". The touch sensor 180K may be arranged on the display screen 194. The touch sensor 180K and the display screen 194 form a touchscreen. The touch sensor 180K is configured to detect a touch operation on or near the touch sensor. The bone conduction sensor 180M may acquire a vibration signal.

In addition, the terminal device 100 further includes a barometric pressure sensor 180C and a distance sensor 180F. The barometric pressure sensor 180C is configured to measure a barometric pressure. In some embodiments, the terminal device 100 computes an altitude by using a barometric pressure value measured by the barometric pressure sensor 180C, so as to assist in positioning and navigation.

The distance sensor 180F is configured to measure a distance. The terminal device 100 may measure the distance by means of infrared light or laser light. In some embodiments, in a photographing scenario, the terminal device 100 may measure a distance by means of the distance sensor 180F, so as to implement fast focusing.

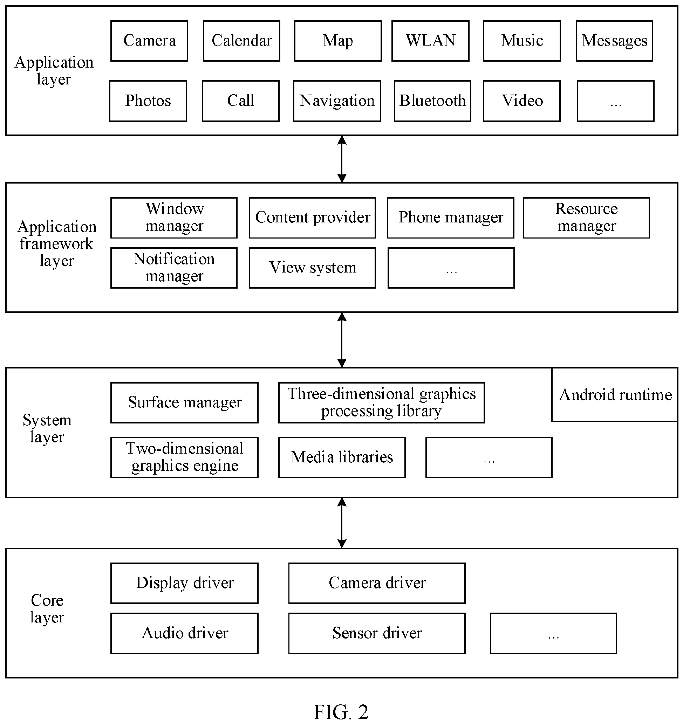

For example, a layered architecture, an event driven architecture, a microcore architecture, a microservice architecture, or a cloud architecture may be configured for a software system of the terminal device 100. In an embodiment of the disclosure, a software structure of the terminal device 100 will be illustratively described with an example of an Android system having a layered architecture. FIG. 2 is a block diagram of a software structure of a terminal device 100 according to an embodiment of the disclosure.

Software is divided into several layers by a layered architecture, and each layer has a clear role and task. The layers are in communication with each other through a software interface. In some embodiments, the Android system is divided into four layers, which are an application layer, an application framework layer, an Android runtime (Android runtime) and system library, and a core layer from top to bottom respectively.

The application layer may include a series of application packages. As shown in FIG. 2, the application packages may include Camera, Calendar, Map, WLAN, Messages, Gallery, Call, Navigation, Bluetooth, Video, and other applications. In an embodiment of the disclosure, the application layer may further include a game application.

The application framework layer provides an application programming interface (application programming interface, API) and a programming framework for the applications at the application layer. The application framework layer includes some predefined functions. As shown in FIG. 2, the application framework layer may include a window manager, a content provider, a phone manager, a resource manager, a notification manager, a view system, etc.

The window manager is configured to manage a window application. The window manager may acquire a size of a display screen, determine whether a state bar exits, lock a screen, take a screen shot, etc.

The content provider is configured to store and acquire data and make the data accessible to an application. The data may include a video, an image, an audio, calls that are made and answered, a browsing history, a bookmark, a phonebook, etc.

The view system includes visual controls, such as a control for displaying a text and a control for displaying an image. The view system may be configured to establish an application. A display interface may be composed of one or more views. For example, a display interface including a short message notification icon may include a view for displaying a text and a view for displaying a picture.

The phone manager is configured to provide a communication function of the terminal device 100, such as call state (including a put-through state, a hang-up state, etc.) management.

The resource manager provides various resources for an application, such as a localized character string, an icon, an image, a layout file, and a video file.

The notification manager enables an application to display notification information in a state bar. The notification information may be used to convey a message of a notification type. The message can automatically disappear after a short stay without user interaction. For example, the notification manager is configured for download completion notification, message reminding, etc. The notification manager may be further a notification which appears on a top state bar of a system in the form of a graph or a scroll bar text, such as a notification of an application running on a background, or a notification which appears on a screen in the form of a dialog window. For example, text information reminding is performed in the state bar, a reminding tone is made, a terminal vibrates, or an indicator light flashes.

The Android runtime includes a core library and a virtual machine. The Android runtime is responsible for scheduling and managing an Android system.

The core library includes two parts: one part is a performance function which the java language needs to call, and the other part is a core library of Android.

The application layer and the application framework layer run in the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of function modules, such as: a surface manager (surface manager), media libraries (Media Libraries), a three-dimensional graphics processing library (such as OpenGL ES), and a 2D graphics engine (such as SGL).

The surface manager is configured to manage a display subsystem, and provide fusion of 2D and 3D layers for a plurality of applications.

The media library supports reproduction and recording of a plurality of common audio and video formats, and static image files, etc. The media library may support a plurality of audio and video encoding formats, such as MPEG 4, H.264, MP3, AAC, AMR, JPG, and PNG.

The three-dimensional graphics processing library is configured to implement three-dimensional graphics drawing, image rendering, composition, layer processing, etc.

The 2D graphics engine is a drawing engine for 2D drawing.

The core layer is a layer between hardware and software. The core layer includes at least a display driver, a camera driver, an audio driver and a sensor driver.

In order to better understand the method for managing a game provided in an embodiment of the disclosure, an implementation process of the method for managing a game at a user visual level will be introduced below in combination with the accompanying drawings.

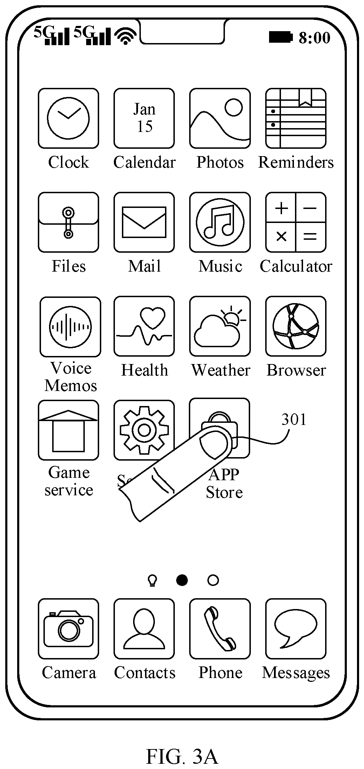

For example, FIG. 3A-FIG. 3F show schematic diagrams of some graphical user interfaces (graphical user interfaces, GUIs) which may be involved in an implementation process of a method for managing a game according to an embodiment of the disclosure. For ease of description, an example in which the terminal device is a mobile phone is used for introduction below.

In some embodiments, when the user needs to play the game, the game may be first downloaded to the mobile phone first. A user can download a game to a mobile phone through a plurality of methods, such as: (1) Locally download a game from App Store on a mobile phone to the mobile phone. (2) Locally download a game to a mobile phone by means of a web page, etc. Methods for downloading a game are not specifically limited in an embodiment of the disclosure.

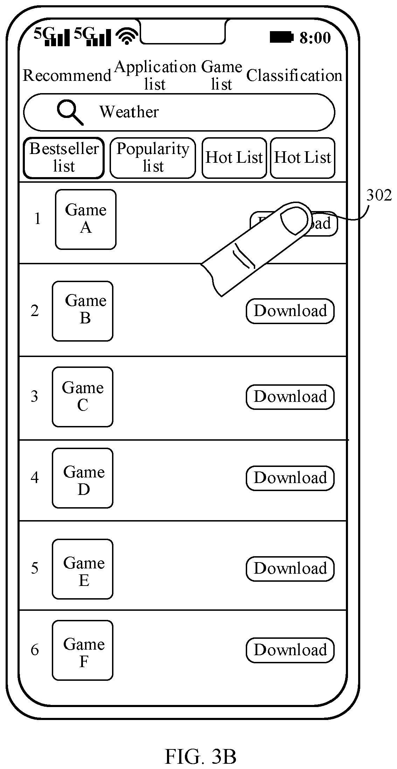

With an example in which the above method for downloading a game is method (1), an exemplary process for downloading a game will be introduced in combination with FIG. 3A and FIG. 3B. As shown in FIG. 3A, an exemplary home screen of a mobile phone is shown. A state bar may be displayed above the home screen. The state bar may include: one or more signal strength indicators of a mobile communication signal (or a cellular signal), one or more signal strength indicators of a wireless fidelity (wireless fidelity, Wi-Fi) signal, an electric quantity indicator of a mobile phone, a time indicator, etc. The home screen may include an application icon display area used to display various types of application icons, such as a Clock icon, a Calendar icon, a Photos icon, a Reminders icon, a Files icon, a Mail icon, a Music icon, a Calculator icon, a Voice Memos icon, a Health icon, a Weather icon, a Browser icon, a Game Server icon, a Settings icon, an App Store icon, etc. A page indicator display area may be provided below the plurality of application icons. A page indicator included in the area is configured to indicate a positional relationship between a page currently displayed and other pages. A tray application icon display area may be displayed below the page indicator, and is used to display a plurality of tray application icons, such as a Camera icon, a Contacts icon, a Phone icon, and a Messages icon. In some other embodiments, the home screen of the mobile phone may include more or fewer application icons or tray application icons than those shown in the figure, which is not limited in the disclosure.

In some embodiments, when the user downloads the game in the above method (1), the user may input an operation 301 (such as a click-on operation) for the App Store icon in the home screen shown in FIG. 3A. In response to the operation 301 by the user, the mobile phone may open an App Store application and display a game bestseller list interface shown in FIG. 3B. The game bestseller list interface may include a plurality of games most downloaded or used, and download controls corresponding to the games.

In some embodiments, assuming that a user needs to download a game A, the user may input an operation 302 (such as a click-on operation) for a download control corresponding to the game A. In response to the operation 302, the mobile phone may download data corresponding to the game A. The mobile phone may download the game A by a background. The data corresponding to the game A may specifically include information such as an installation package or another data package corresponding to the game A.

It should be noted that in the method for managing a game provided in an embodiment of the disclosure, a game service application may be installed in a mobile phone, and a game management function may be provided. In some cases, the game management function in an embodiment of the disclosure may be specifically performed by the game service application. The game management functions may specifically include functions of dynamically identifying a game application, setting functions of a game through double entrances, and performing an intelligent layout on game function icons, etc. The double entrances in an embodiment of the disclosure may include an out-of-game setting entrance and an in-game setting entrance. The out-of-game setting entrance may be provided by the game service application, and the in-game setting entrance may be provided by a control (such as a suspended ball) displayed in a game interface.

It should be noted that the game service application may also be described as a GAME MANAGER (GAME MANAGER), a game service manager, a game manager, etc. As a setting entrance for function setting of one or more games installed in the terminal device, the game service application may specifically be presented as a shortcut application icon (not shown in the figure) displayed on a mobile phone desktop.

It should be further noted that unlike in-game function setting, a plurality of games downloaded (or installed) in the mobile phone may be centrally managed by an out-of-game game service application. However, through an in-game setting entrance, only a game currently running can be generally individually set, but a plurality of games cannot be centrally set. The two arrangements and features will be introduced below in combination with accompanying drawings, which will not be described in detail herein.

In some embodiments, the mobile phone can enable the game management function through a plurality of methods, such as: method (1): enable the game management function by default in factory settings of the mobile phone. Method (2): arrange a switch control corresponding to the game management function in the mobile phone, and manually enable the game management function by the user by means of the switch control.

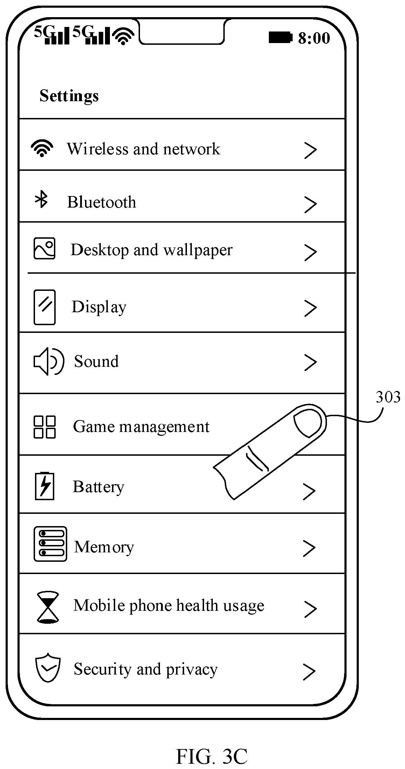

For example, in a case that the game management function is enabled through method (2) mentioned above, a process of enabling a game management function will be introduced in combination with FIG. 3C. As shown in FIG. 3C, a setting interface in a mobile phone is shown. The setting interface may include a plurality of setting function items (item), such as a wireless and network setting item, a Bluetooth setting item, a desktop and wallpaper setting item, a display setting item, a sound setting item, a game management setting item, a battery setting item, a storage setting item, a mobile phone health usage setting item, and a security and privacy setting item.

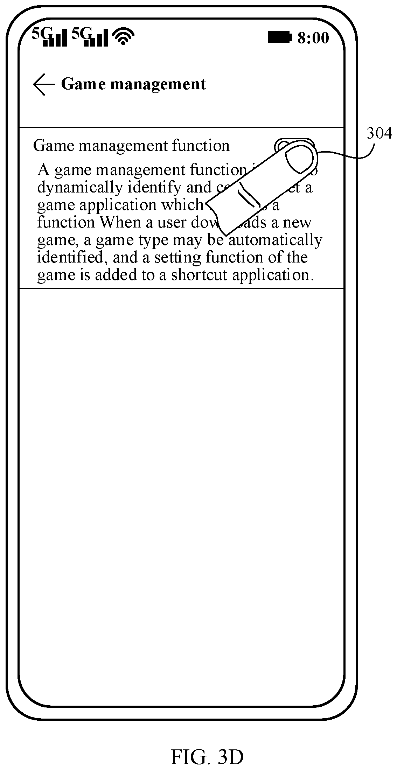

In some embodiments, when the user needs to enable the game management function, an operation 303 (such as a click-on operation) may be input for a game management setting item in FIG. 3C. In response to the operation 303, the mobile phone may display a game management setting interface shown in FIG. 3D. For example, as shown in FIG. 3D, the game management setting interface may include a switch control corresponding to the game management function and an introduction statement for the game management function. The introduction statement is, for example, that "the game management function is used to dynamically identify and centrally set an application supporting the function. When a user downloads a new game, a game type may be automatically identified, and a setting function of the game is added to shortcut application".

In some embodiments, the user may input an operation 304 (such as a click-on operation) for a switch control of a game management function shown in FIG. 3D. In response to the operation 304, the mobile phone may start a game management function.

In a scenario that the game management function is enabled, after the mobile phone downloads the data corresponding to the game A, the mobile phone may dynamically identify, based on the data, a type of the application currently downloaded. When identifying that the application type is a game type, the mobile phone may further update the application to the game service application, and add a function (or mode) corresponding to the game to the game service application. It should be understood that the game service application herein may correspond to the above shortcut application.

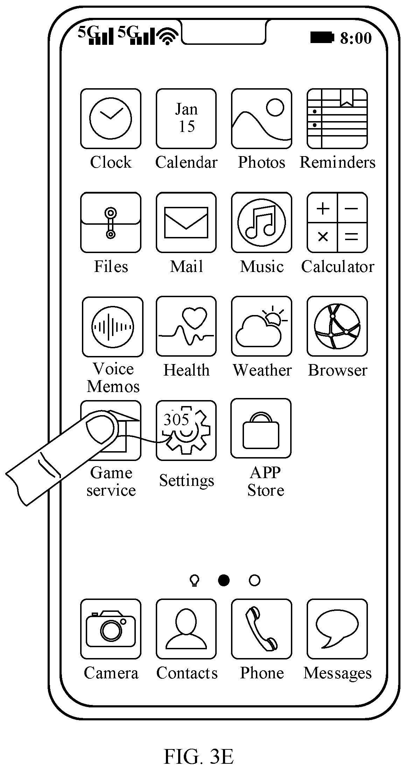

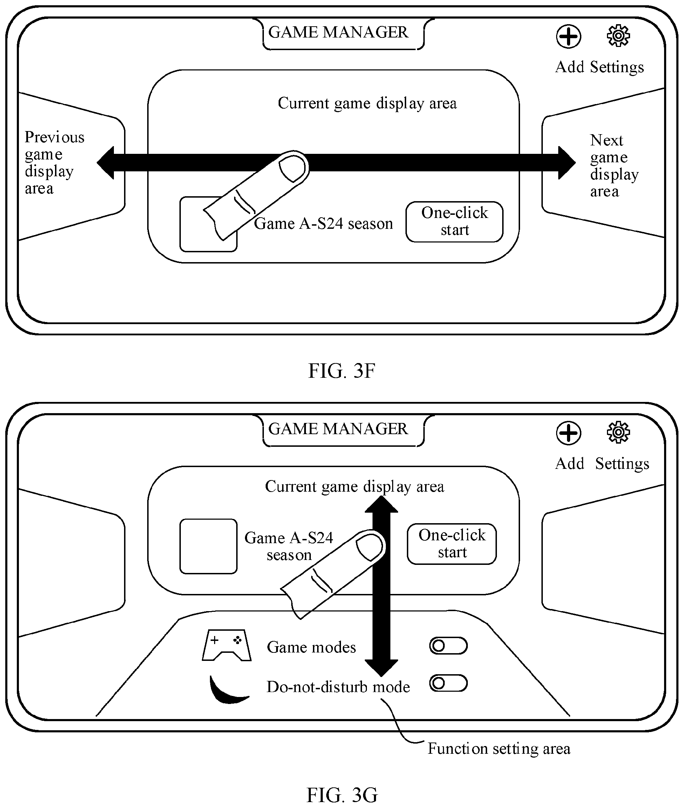

In some embodiments, the user can enter the game service application by clicking on an icon of the game service application displayed on a desktop of the mobile phone. For example, as shown in FIG. 3E, when an operation 305 (such as a click-on operation) input by a user for an icon of a game service application is received, in response to the operation 305, the mobile phone may display related interfaces of the game service application shown in FIG. 3F and FIG. 3G.

As shown in FIG. 3F, a game display interface of a game service application is shown. The game display interface mainly includes a current game display area. The current game display area may include a game name, a one-click start control, etc., and optionally, may further include a game introduction. For example, a previous game display area may be displayed on a left side of a current game display area, and a next game display area may be displayed on a right side of the current game display area. For example, the current game display area, the previous game display area, and the next game display area may be specifically presented as game display cards corresponding to different games. The game display card may include a game name, a one-click start control, etc. The user can switch the current game display area to a previous game display area or a next game display area by inputting a slide-right operation or a slide-left operation on the current interface. For example, a game display card corresponding to a current game may be specifically switched to a game display card corresponding to a previous game or a game display card corresponding to a next game. Certainly, the game display cards corresponding to different games may be switched through a slide-up operation or a slide-down operation. Specific operation type of switching game display cards are not limited in an embodiment of the disclosure.

It should be noted that the previous game and the next game in an embodiment of the disclosure are merely used to distinguish between games currently displayed in a home screen area. Display positions of games are not certainly limited to only a fixed rule, but may be flexibly set according to requirements. For example, an arrangement order of a plurality of games or game display cards (such as a previous game, a current game, a next game, or a game display card corresponding to the previous game, a game display card corresponding to the current game, and a game display card corresponding to the next game shown in FIG. 3F) from left to right in the game display interface may correspond to a download time order of the games. For another example, an arrangement order of a plurality of games or game display cards (such as a previous game, a current game, a next game, or a game display card corresponding to the previous game, a game display card corresponding to the current game, and a game display card corresponding to the next game shown in FIG. 3F) from left to right in the game display interface may be an initial order corresponding to a game name, etc. This is not limited in the disclosure.

It should be further noted that the previous game, the current game, and the next game shown in FIG. 3F are merely examples. In some other embodiments, the game display interface may be further configured to display game display cards corresponding to more games. For example, if the game service application includes a plurality of games (such as more than 3 games), when the user continuously slides right or left, the mobile phone may display, in response to a continuous slide-right or slide-left operation and in a form of scrolling left or right, another game not currently displayed. Alternatively, if the game service application includes a plurality of games (such as more than 3 games), when the user continuously slides right or left, the mobile phone may display, in response to a continuous slide-right or slide-left operation and in a form of scrolling left or right, another game display card not currently displayed.

In some embodiments, display areas (or game display cards) of one or more game applications presented in the display interface shown in FIG. 3F or FIG. 3G mentioned above may correspond to, in a one-to-one manner, game applications installed in the mobile phone.

As shown in FIG. 3G, a setting interface corresponding to a game currently displayed is shown. The game display interface may include a current game display area (or a game display card corresponding to the current game). A setting area corresponding to the current game may be included below the current game display area. The setting area may include a game mode setting control, a do-not-disturb mode setting control, etc. For example, a setting area corresponding to a game may be specifically presented as a setting card. The setting card includes a game mode setting control, a do-not-disturb mode setting control, etc. In some embodiments, when the mobile phone displays the game display interface shown in FIG. 3F, a setting card corresponding to a game may automatically appear below (or in another orientation) the game display card. Optionally, in some other embodiments, when the mobile phone displays the game display interface shown in FIG. 3F, the user can display the setting card below the current game display area in a scrolling form by inputting a slide-up operation (or another type of preset operation). In yet some other embodiments, when the mobile phone displays the interface shown in FIG. 3G, the user can hide the setting card from the current interface in a scrolling form by inputting a slide-down operation (or another type of preset operation).

For example, when a user needs to set a game mode of a game A, a game display card corresponding to the game A may be first found through a slide-left operation or a slide-right operation on the above game display interface, and the game display card is displayed on a current interface (such as the interface shown in FIG. 3F). Then, the user may scroll the setting card corresponding to the game A to the current display interface by inputting a slide-up operation on the current interface. That is, the setting card corresponding to the game A is displayed below the game display area in the current interface. Then, the user may set the game A by inputting an operation for a setting control of a game mode. Optionally, after setting the game A, the user may further input a slide-down operation on the interface. In response to the slide-down operation, the mobile phone may hide the setting card from the current interface in a scrolling form.

In some embodiments, setting cards corresponding to different games may present different personalized content. For example, setting cards corresponding to different games may include different functions. For example, a setting card corresponding to a game A may include a function corresponding to the game A. A setting card corresponding to a game B may include a function corresponding to the game B. The function corresponding to the game A may be different from the function corresponding to the game B. Through the personalized function display, different games can be flexibly and efficiently set in a personalized manner.

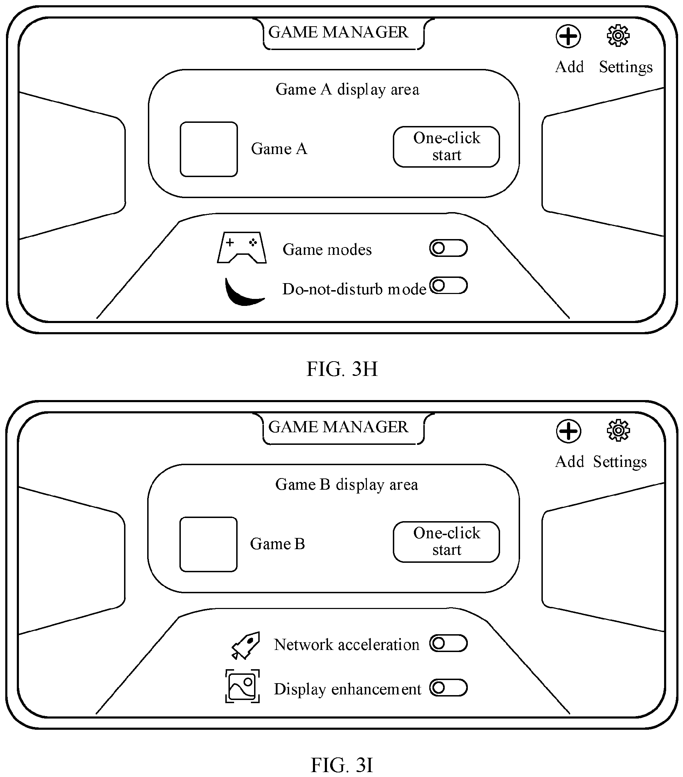

For example, as shown in FIG. 3H, the setting functions included in the setting card corresponding to the game A may be a game mode and a do-not-disturb mode. As shown in FIG. 3I, the setting functions included in the setting card corresponding to the game B may be network acceleration and display enhancement. The game application service displays personalized setting cards for different game applications because in some scenarios, different game applications support different setting functions (for example, different game applications are configured with different types of setting functions), such that setting functions corresponding to different game applications are required to be displayed in a personalized manner. Thus, the user can differently set different game applications.

In some examples, different types of functions may be set for different game applications by means of the game service application.

It should be noted that In FIG. 3H and FIG. 3I mentioned above, only different types of functions corresponding to different games are used as an example for introduction. During actual application, different games may correspond to information in different game display cards, display effects (or styles) of different game display cards, or display effects (or styles) of different setting cards, etc. The display effects (or styles) of the game display cards and/or the setting cards described herein may refer to display positions of the game display cards and/or the setting cards in the mobile phone interface, relative positions of the game display cards and the setting cards, rendering effects presented by the game display cards and/or the setting cards, etc., which is not limited in an embodiment of the disclosure.

In some embodiments, settings made by a user in the game service application for a game (such as the game A) may be synchronously updated to the game application (such as the game A). When the user plays the game A, a function or a parameter in a setting panel corresponding to the game A is consistent with the settings of the user in the game service application.

It should be noted that in the above embodiments shown in FIG. 3F and FIG. 3G, only an example in which the user enters a slide operation to switch the game display card or the setting card is used, only an example in which the game display card is displayed, hidden or switched in a scrolling form, or the setting card is displayed, hidden or switched in a scrolling form is used for introduction, which, however, can not be limited thereto during actual application. For example, the user may switch the game cards, or display or hide the setting cards by inputting a single-click operation, a double-click operation, or a long-press operation, etc. on the interface. For another example, the game cards and/or the setting cards may be displayed on or hidden in a current interface in a fade-out and fade-in manner, etc., which is not limited in an embodiment of the disclosure.

According to the method for managing a game provided in an embodiment of the disclosure, by means of the game service application having dynamic game identification, double-entrance centralized management and intelligent function layout functions, a user can centrally manage and set a native game at an out-of-game entrance. Moreover, a personalized setting of a single game is supported such that the user can acquire a game setting entrance and set the game out of a game. Thus, the game can be prevented from being interrupted, and immersive experience of the user in the game is improved.

A method for setting a game out of a game through an entrance provided by an application out of the game is introduced above in combination with FIG. 3F-FIG. 3I. However, it should be understood that in addition to setting one or more games in a game service application, the method for managing a game provided in an embodiment of the disclosure may further provide and set a hidden entrance in a game, such that when a user does not have a function setting requirement, the entrance will not affect immersive experience of game playing of the user. When the user has a function setting requirement, related settings may be flexibly performed in real time through the entrance. A method through which a game is set in a game in the method for managing a game provided in an embodiment of the disclosure will be specifically illustratively introduced below in combination with accompanying drawings.

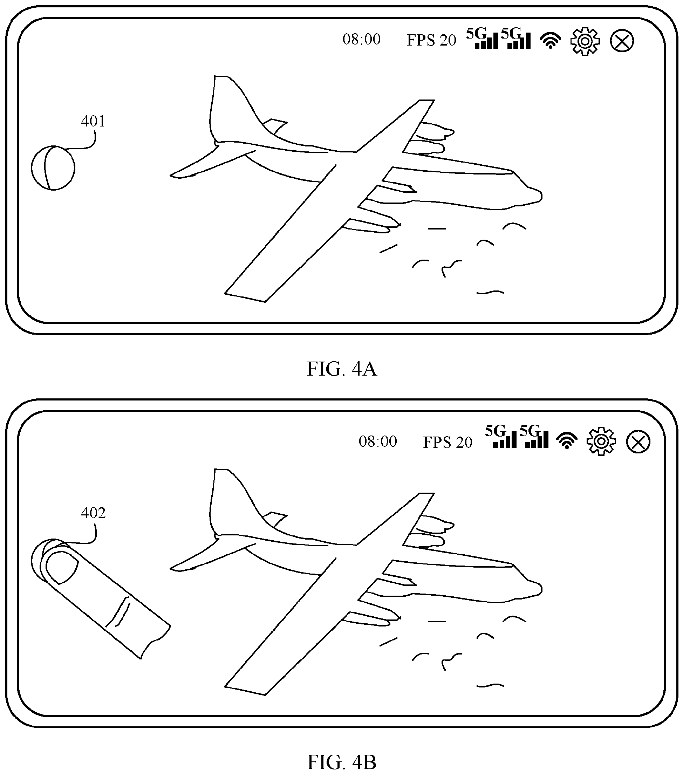

For example, FIG. 4A-FIG. 4C show schematic diagrams of related GUIs which may be involved in an implementation process of another method for managing a game according to an embodiment of the disclosure.

As shown in FIG. 4A, a schematic diagram of a game interface is shown. The game interface may include a suspended ball 401. The suspended ball 401 is an entrance for game setting in a game.

It should be noted that the suspended ball shown in an embodiment of the disclosure may be used as an example of a setting entrance. During actual application, the setting entrance in the game may be configured as a control of another form, such as an icon or a dot, which is not limited in an embodiment of the disclosure.

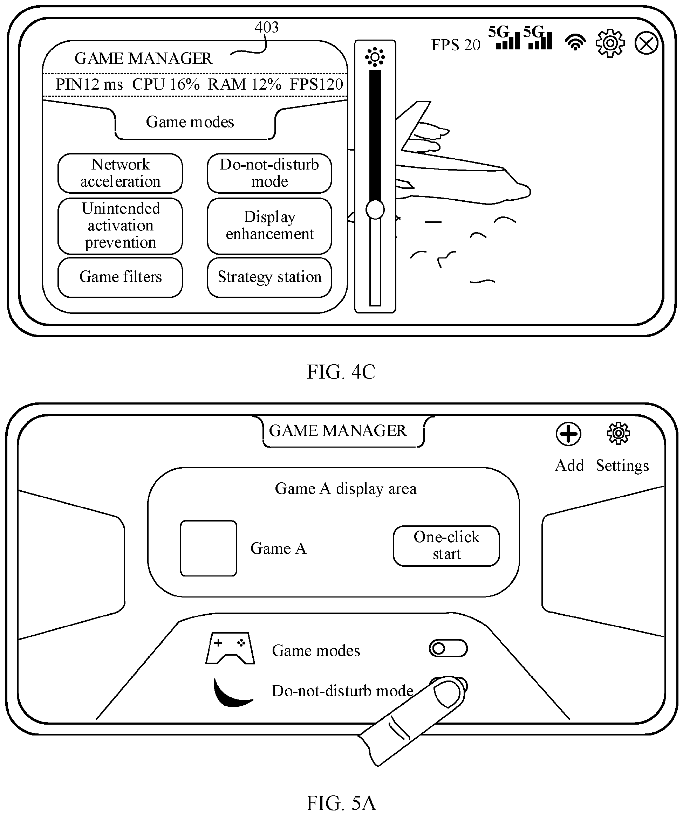

In some embodiments, as shown in FIG. 4B, when the user needs to set a game, an operation 402 (such as a click-on operation) may be inputted for the suspended ball 401. In response to the operation 402 input by the user, the mobile phone may display a function setting area shown in FIG. 4C on the current game interface. For example, the function setting area may be specifically presented as a setting panel 403. The setting panel 403 may be configured to display a game mode, a plurality of game parameters corresponding to the game mode, etc. For example, as shown in FIG. 4C, the game mode and the plurality of game parameters corresponding to the game mode may be presented in a game mode display area, and the game mode display area may be presented in a specific area (such as an upper area in the setting panel) in the setting panel.

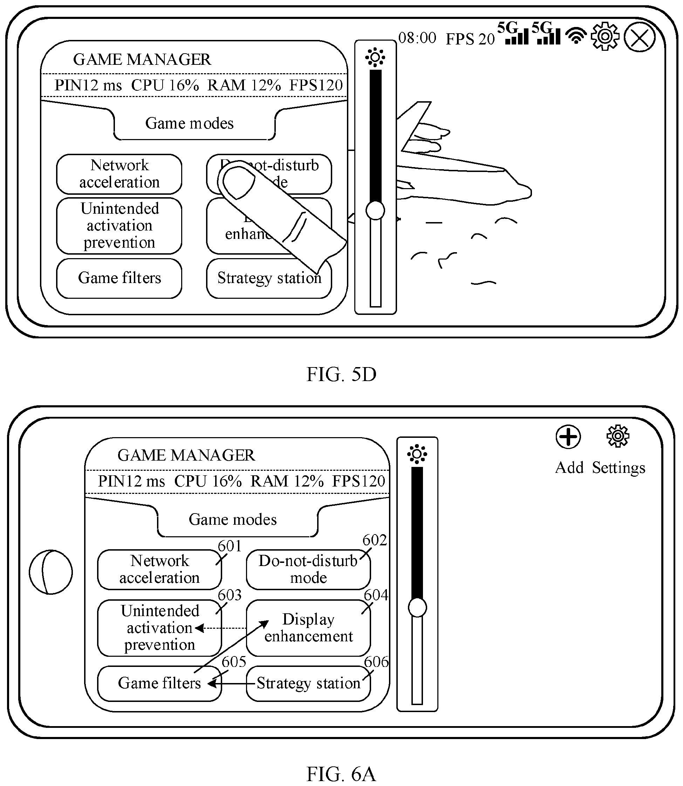

In a possible implementation, the game mode display area may be displayed or hidden according to requirements of a user. For example, the game mode display area may be set in a form of a drawer. When a user needs to view a game mode and/or a game parameter, a preset operation (such as a pull-down operation inputted for the game mode display area) may be inputted. In response to the preset operation, the game mode display area may be displayed in the setting panel, for example, may cover part or all area of the setting panel (for example, cover a display area of a function icon shown in FIG. 6A).

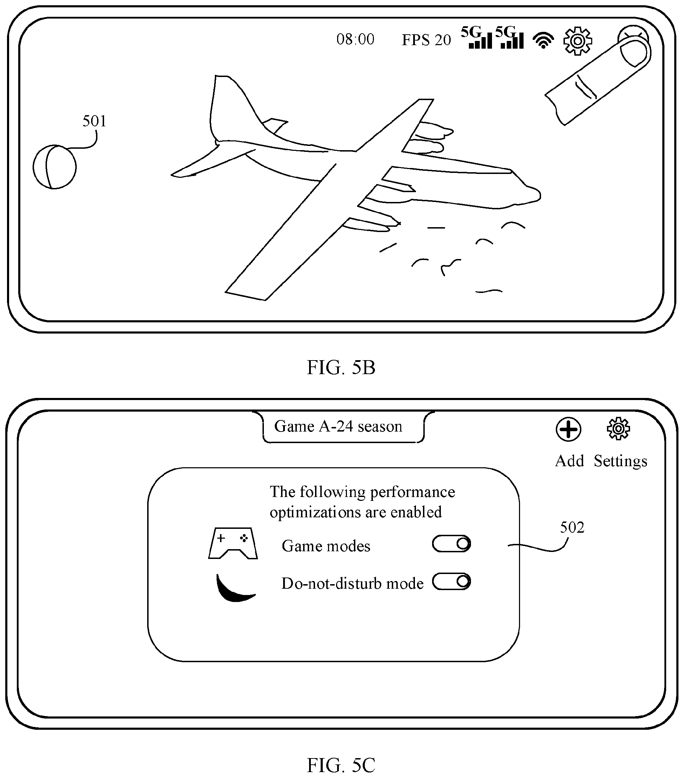

For example, the game parameter may include: a network delay (PIN) duration (such as PIN 12 ms shown in FIG. 5C) currently corresponding to a game, an occupancy rate (such as CPU 16% shown in FIG. 5C) of a central processing unit (central processing unit, CPU), an occupancy rate (such as RAM 12% shown in FIG. 5C) of an RAM, a game frame rate (such as FPS 120 shown in FIG. 5C), etc.

In addition, the setting panel 403 may further include a plurality of function icons, such as a network acceleration icon, a do-not-disturb mode icon, an unintended activation icon, a display enhancement icon, a game filter icon, and an attack station icon. The plurality of function icons may be used to receive an operation input by a user, and then the mobile phone may enable or disable a function in response to the operation input by the user. For example, when the user needs to enable a network acceleration function, the user may input a click-on operation for the network acceleration icon in the setting panel. In response to the click-on operation, the mobile phone may enable a network acceleration function corresponding to the game.

In some embodiments, functions corresponding to function icons displayed in the setting panel may all be functions supported by the mobile phone. That is, functions not supported by the mobile phone cannot be displayed in the setting panel. In a possible case, for example, mobile phones of different types may support different functions. In this case, specific function icons displayed in setting panels of different mobile phones may be different. For example, as shown in Table 1 below, an example of a corresponding relationship between a mobile phone type and a supported function is shown. With the corresponding relationship shown in Table 1 as an example, a total of 4 function icons of a network acceleration icon, a display enhancement icon, an unintended activation prevention icon, and a game filter icon may be displayed on a setting panel of a mobile phone of type 1. A total of 3 function icons of a network acceleration icon, an unintended activation prevention icon, and a game filter icon may be displayed on a setting panel of a mobile phone of type 2.

**Table 1**

| Mobile phone type | Supported function |
|---|---|
| Type 1 | Network acceleration, display enhancement, unintended activation prevention, and game filter |
| Type 2 | Network acceleration, unintended activation prevention, and game filter |
| ... | ... |
| Type n | Display enhancement, unintended activation prevention, and game filter |

In another possible case, different types of games may also support different functions. For example, different games may be pre-configured to support different functions or customized functions are provided for different game types during game development. Therefore, specific function icons displayed in setting panels of different games may be different. Specifically, there are various of game subdivision types, including a multiplayer online battle arena (multiplayer online battle arena, MOBA) game, a shooting type game, a card type game, and a chess and card type game. When playing different types of games, users have greatly different service requirements. For example, when playing a shooting type game such as Game for Peace, a user may have higher requirements on picture brightness and character clarity. When playing a tactical competitive game which requires a multi-player voice, such as Honor of Kings, a user may have higher requirements for do-not-disturb, voice smoothness, and voice modification. Therefore, according to the method for managing a game provided in an embodiment of the disclosure, personalized function support solutions and function display solutions can be customized for different types of games.

For example, as shown in Table 2 below, an example of a corresponding relationship between a game type and a supported function is shown. With the corresponding relationship shown in Table 2 as an example, a total of 3 function icons of a network acceleration icon, an unintended activation prevention icon, and a game filter icon may be displayed in the setting panel of the game A. A total of 4 function icons of a network acceleration icon, a display enhancement icon, an unintended activation prevention icon, and a game filter icon may be displayed in the setting panel of the game B.

**Table 2**

| Game type | Supported function |
|---|---|
| Game A | Network acceleration, unintended activation prevention, and game filter |
| Game B | Network acceleration, display enhancement, unintended activation prevention, and game filter |
| ... | ... |
| Game n | Display enhancement, unintended activation prevention, and game filter |

In some embodiments, which function icons are specifically displayed in the setting panel may be determined through a plurality of methods, such as: method (1): Determine, according to a type corresponding to a mobile phone, that an icon of which function is displayed in a setting panel. For example, the mobile phone may acquire a type corresponding to the mobile phone, and acquire, based on a corresponding relationship between the type and the supported function, a function supported by the mobile phone. Then, icons of these functions are displayed in the setting panel. Method (2): Determine, according to a game type, that an icon of which function is displayed in a setting panel. For example, when the user starts a game (for the first time), the mobile phone may acquire a game type corresponding to a current game, and then acquire a function supported by the game according to a corresponding relationship between the game type and the supported function. Then, icons of these functions are displayed in the setting panel. Method (3): Determine, according to a type and a game type, that an icon of which function is displayed in a setting panel. For example, the mobile phone may first acquire a type corresponding to the mobile phone, and acquire, according to the corresponding relationship between the type and supported function, one or more functions (denoted as first functions) supported by the mobile phone. Then, a game type corresponding to the current game is acquired, and according to a corresponding relationship between the game type and supported function, one or more functions (denoted as second functions) supported by the game are acquired. An intersection of the first functions and the second functions is acquired, and icons of functions included in the intersection are displayed on the setting panel. Alternatively, the mobile phone may first acquire the game type corresponding to the current game, and then acquire, according to the corresponding relationship between the game type and the supported function, one or more functions (denoted as second functions) supported by the game. Then, a type corresponding to the mobile phone is acquired, and according to the corresponding relationship between the type and supported function, one or more functions (denoted as first functions) supported by the mobile phone are acquired. An intersection of the first functions and the second functions is acquired, and icons of functions included in the intersection are displayed on the setting panel. The order of acquiring the functions supported by the type of the mobile phone and acquiring the functions supported by the game in method (3) is not specifically limited in an embodiment of the disclosure.

It should be noted that the above-introduced plurality of methods for determining that which function icons are displayed on the setting panel may be performed when the mobile phone first runs the game, and are not required to be performed when the game is not run for the first time. The reason why the methods are not required to be performed when the game is not run for the first time is that in a possible implementation, when the game is exited each time, the mobile phone may record a function icon displayed in the setting panel when the game is exited. When the game is run again on the same mobile phone, the mobile phone may display, in the setting panel according to the recorded related information, a function icon consistent with that when the game is exited for the last time. Therefore, it is not required to detect the mobile phone type, the game type, and the related corresponding relationship when the game is started each time such that computing resources of the mobile phone can be saved, and efficiency of displaying function icons on the setting panel can be improved.

In some embodiments, when a user needs to enable or disable a function, a preset operation (such as a click-on operation) for an icon corresponding to the function may be input into the setting card. After the user sets a function in the setting card, the setting may be synchronously updated to the game service application. For example, the user may enable the network acceleration function by clicking on the network acceleration icon in the setting card. In this case, after the network acceleration function is enabled, the network acceleration function corresponding to the game in the game service application is also enabled synchronously.

According to the method for managing a game provided in an embodiment of the disclosure, by setting a hidden game setting entrance such as a suspended ball in a game, a requirement that a user sets a game at any time can be satisfied without affecting immersive experience of the user.

A case that the game service application and the setting panel can memorize set function states in the method for managing a game provided in an embodiment of the disclosure will be specifically introduced in detail below in combination with the accompanying drawings.

For example, FIG. 5A and FIG. 5B show schematic diagrams of related GUIs which may be involved in an implementation process of yet another method for managing a game according to an embodiment of the disclosure. For ease of understanding, an example in which the terminal device is still a mobile phone is used for introduction below.

In the method for managing a game provided in an embodiment of the disclosure, the game service application and the setting panel may present function state memory effects respectively. The function state memory effects may be implemented through a read and record capacity of the mobile phone. The read and record capacity may specifically include: a capacity of the mobile phone to read and record a function state set by the user for the game application service and the setting panel.

Specifically, the mobile phone may record a function state corresponding to the game in the game service application each time the user exits the game application. Alternatively, the mobile phone may memorize a function state corresponding to the game in the setting panel each time the user exits the game application. When the game service application is run next time, the mobile phone may set, according to a corresponding function state recorded when the mobile phone exits the game last time, a function state corresponding to the game of the game service application, such that the function state corresponding to the game is consistent with the function state last time. Alternatively, when the game is run next time, the mobile phone may set the function state in the setting panel according to a recorded corresponding final set state when the mobile phone exits the game last time, such that the function state corresponding to the game is consistent with the function state last time.

For example, a function state herein may include an enabled state or a disabled state, or a specific parameter value to which a function is set, etc. For ease of description, in an embodiment of the disclosure, a function state in the game service application and a function state in the setting panel when the user exits the game are uniformly described as final set states.

It should be noted that the game service application and the setting panel are two methods for setting a game function. Differences mainly lie in that setting entrances corresponding to the two methods are different (for example, a setting entrance corresponding to the game service application is, for example, an icon corresponding to the application; and a setting entrance corresponding to the setting panel is, for example, a suspended ball displayed in a game interface). Moreover, corresponding scenarios are also different (for example, a game application service corresponds to a setting scenario out of a game; the setting panel corresponds to a setting scenario in a game). However, due to a function setting performed by a user in either of the two setting methods, a corresponding set state may be synchronized to the other setting method. For example, in a game service application, an "on" setting is performed on a "network acceleration" function of a game A, in the setting panel corresponding to the game A, the "network acceleration" function is also synchronized to an "on" state. Therefore, in some cases, a final set state recorded by the mobile phone based on the game application service and a final set state recorded by the mobile phone based on the setting panel may be the same.

Optionally, In order to save resource consumption in the read and record process of the mobile phone, a method through which the mobile phone reads and records a final set state may be preset, such as: method (1): choose, by the mobile phone according to which setting method a user set a function of a game through, to read and record a final set state based on the setting method. Specifically, if the user sets the function of the game by means of the game service application without using a setting panel, when the user exits the game, read and record, by the mobile phone, a final function state based on a function state in the game service application. If the user sets the function of the game by means of the setting panel without using the game service application, when the user exits the game, record, by the mobile phone, the final function state based on the function state in the setting panel. Method (2): record, by a mobile phone, a final state according to a default mode, for example, record, by default, a final function state according to a function in a setting panel. Method (3): detect, by a mobile phone, whether a game service application is started in a game. If yes, when the user exits the game, record a final set state based on a function state in the game service application. If no, when the user exits the game, record the final set state based on the function state in the setting panel, etc. Which method the mobile phone records the final set state through is not specifically limited in an embodiment of the disclosure.

A final set state memory function corresponding to the game service application and a final state memory function corresponding to the setting panel will be introduced in detail below respectively.

As shown in FIG. 5A-FIG. 5C, the final set state memory function corresponding to the game service application is first introduced. In some embodiments, the game service application may have a function of reading and recording a last setting of a user. As shown in FIG. 5A, assuming that the user starts the do-not-disturb mode in a setting card corresponding to a game A in the game service application. After the game service application completes a setting of the game A, the user may return to the desktop, and clicks on a game application icon on the desktop to start running a game. Then, when the user exits the game, for example, as shown in FIG. 5B, the user exits the game by clicking on an exit control in the game interface. The game service application may read a final set state corresponding to the game A in the game service application at the background when the user exits the game A, and store the final set state. When the user enters the game next time, the game interface may display reminding information about enabled functions. These enabled functions are functions which are set as enabled in the game service application when the game is exited last time. For example, the reminding information may be as shown in FIG. 5C, that is, the user may be reminded, in the form of a card 501, of a function that the game are currently started.

A function set by the player last time is read and memorized by means of the game service application. After the player completes a setting, a final set state when the player exits the game is read, and a corresponding function is automatically started when the player enters the game next time. In this way, a usage habit of the player can be intelligently matched such that repeated operations can be prevented, and operation cost of the player can be reduced.

With reference to FIG. 5D, a case that the setting panel memories the final set state will be introduced below. Assuming that a user enables a do-not-disturb mode corresponding to the game A by means of a setting panel in the game A. In this case, the mobile phone may highlight a control corresponding to the do-not-disturb mode, or remind the user that the do-not-disturb mode is turned on for the game A through vibration, etc. If the user exits the game A (for example, as shown in FIG. 5B, the user exits the game by clicking on an exit control in the game interface), the mobile phone may read, at the background, a final set state corresponding to the game A in the setting panel when the user exits the game A, and store the final set state. When the user enters the game next time, the game interface may display reminding information about enabled functions. These enabled functions are functions which are set as enabled in the setting panel when the game is exited last time. For example, the reminding information may be as shown in FIG. 5C, that is, the user may be reminded, in the form of a card 501, of a function that the game are currently started. In another example, when the user enters the game next time and starts the setting panel again, a control corresponding to the do-not-disturb mode in the setting panel may be automatically highlighted to remind the user that the do-not-disturb mode of the game is currently turned on.

According to the method for managing a game provided in an embodiment of the disclosure, a function set by the player last time is read and memorized by means of the mobile phone application. After the player completes a setting, a final set state when the player exits is read, and a corresponding function is automatically started when the player enters the game next time. In this way, a usage habit of the player can be intelligently matched such that repeated operations can be prevented, and operation cost of the player can be reduced.

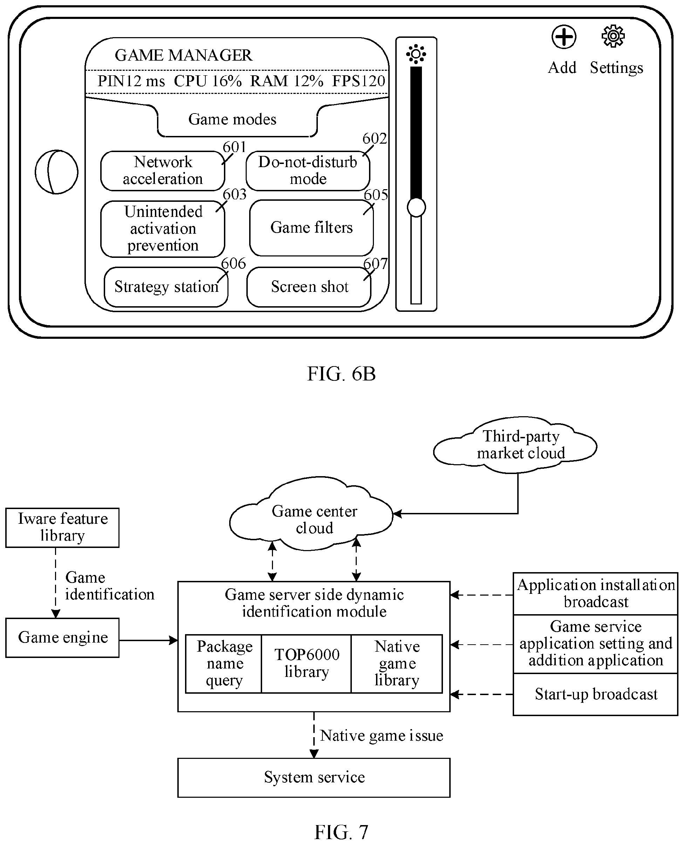

Considering that different mobile phones in the current market have different configurations, for example, some high-end mobile phone types support a high frame rate of 120 Hz and high dynamic range imaging (high dynamic range imaging, HDR), these configurations can achieve better game frame stability and game picture brightness. Moreover, some low-end mobile phone types currently do not have corresponding configuration capacities. In view of such a current situation, the game service application further provides a capacity of adapting to different types to display function layouts. For example, if the background identifies that the mobile phone does not support HDR, a "display enhancement" function module is no longer displayed in the function panel, and other functions may be arranged in sequence in a position covering manner in a "Z" shape. For ease of understanding, the intelligent layout function of the game service application will be specifically illustratively introduced in more detail in combination with FIG. 6A and FIG. 6B.

For example, FIG. 6A and FIG. 6B are schematic diagrams of related GUIs which may be involved in an implementation process of still another method for managing a game according to an embodiment of the disclosure.

In some embodiments, the setting panel (as shown in FIG. 6A and FIG. 6B) includes a game mode display area. The game mode display area may be used to display a game mode and a plurality of game parameters corresponding to the game mode. For example, the game parameter may include: a network delay (PIN) duration (such as PIN 12 ms shown in FIG. 6A) currently corresponding to a game, an occupancy rate (such as CPU 16% shown in FIG. 6A) of a central processing unit (CPU), an occupancy rate (such as RAM 12% shown in FIG. 6A) of an RAM, a game frame rate (such as FPS 120 shown in FIG. 6A), etc.

In addition, the setting panel may further include icons corresponding to a plurality of functions. With FIG. 6A as an example, it is assumed that function icons (or referred to as function controls) displayed in a current setting panel include: a network acceleration icon 601, a do-not-disturb mode icon 602, an unintended activation prevention icon 603, a display enhancement icon 604, a game filter icon 605, an attack station icon 606, and a screen shot icon 607. However, if during actual usage, due to a limitation of a mobile phone type, the mobile phone actually does not support the display enhancement function, when the mobile phone acquires that the mobile phone does not support the display enhancement function, the display enhancement icon 604 may be hidden in or deleted from the current setting panel, and other function icons supported by the mobile phone after the display enhancement icon 604 may cover new positions in sequence in a shape of "Z". An interface after the positions of the function icons are adjusted may be shown in FIG. 6B.

A more specific case may include, for example, that a user has two mobile phones (denoted as a mobile phone A and a mobile phone B). A mobile phone type of the mobile phone A is a higher-end type and supports a HDR function, and a mobile phone type of the mobile phone B is a lower-end type and does not support the HDR function. When a user runs a game on the mobile phone A, if the mobile phone A detects that the mobile phone supports HDR, a "display enhancement" icon (such as the display enhancement icon shown in FIG. 6A) may be displayed on the setting panel. When a user runs a game on the mobile phone B, if the mobile phone B detects that the mobile phone B does not support HDR, the "display enhancement" icon may not be displayed on the setting panel of the game, and other function icons after the "display enhancement" icon in the original mobile phone A may be shifted forwards in sequence by one position, for example, shifted forwards in sequence in a "Z" shape, such that only function icons corresponding to functions supported by the mobile phone B (as shown in FIG. 6B) are displayed on the setting panel of the mobile phone B.

In some embodiments, the setting panel may also have a memory capacity for a displayed function icon. Specifically, the mobile phone may read and record a function icon displayed in a setting panel corresponding to the mobile phone. When the game is still run on the mobile phone next time, the function icon displayed in the setting panel may be consistent with a function icon displayed when the game is exited last time. For example, with a mobile phone A as an example, assuming that the mobile phone A supports a "display enhancement" function but does not support a "screen shot" function, a display enhancement icon will be displayed in a setting panel corresponding to the game, and a screen shot icon will not be displayed. When the game is exited, the mobile phone A can read and record a function icon displayed in the setting panel. When the mobile phone A enters the game next time, the mobile phone may display, in the setting panel, a function icon consistent with a function icon recorded when the game is exited last time. That is, the display enhancement icon is also displayed, but the screen shot icon is not displayed.

According to the method for managing a game provided in an embodiment of the disclosure, an adaptive layout is performed on a function configuration chart of a game based on a function actually supported by a terminal device such that a situation that a user cannot enable a function in different types can be prevented, and a better function arrangement can be always maintained compared with a fixed layout.

Interface content of a visual level that may be involved in an implementation process of the method for managing a game provided in an embodiment of the disclosure is introduced above in combination with the accompanying drawings. In order to better understand the method for managing a game provided in an embodiment of the disclosure, underlying implementation logic of the method for managing a game provided in an embodiment of the disclosure will be introduced in combination with the accompanying drawings.

For example, as shown in FIG. 7, a schematic flow diagram of a method for managing a game according to an embodiment of the disclosure is shown. The process may correspond to a process that a game service application dynamically identifies a game application, and an execution body of the process may be the terminal device introduced in FIG. 1 or FIG. 2 mentioned above.

As shown in FIG. 7, in some embodiments, the terminal device may specifically include a game engine and a game server side dynamic identification module (referred to as a dynamic identification module below). The game engine may acquire an IWare feature of the application according to a game feature library (such as an IWare feature library), and transmit the IWare feature to the game server side dynamic identification module. In addition, the game engine may also have a capacity to identify the game application. For example, the IWare feature library may include a feature corresponding to a game application, and the feature can be used to identify the game application.

The dynamic identification module may store information corresponding to a plurality of game applications, such as data packet information (such as a packet name) of the game application and a game application identifier (such as a name of the game application). In some embodiments, the dynamic identification module may acquire game information of a plurality of game applications from the game center cloud. For example, the dynamic identification module may acquire package names corresponding to a plurality of game installation packages from the game center cloud. In some other embodiments, the dynamic identification module may acquire game information corresponding to first N (that is, TOP N) games in any game leader board, and store, based on the TOP N games, a game library (such as a TOP6000 game library) including TOPN games. In still some other embodiments, the dynamic identification module may further store a game library including games mounted on the mobile phone, etc. In addition, the dynamic identification module may further have a capacity of dynamically identifying the game application. In a possible scenario, the dynamic identification module may identify the game application based on the IWare feature transmitted by the game engine.

It should be noted that a game engine may identify a game application mainly according to user behaviors and habit features. These methods have limited identification rates, and cannot satisfy a requirement of a user for an identification accuracy rate of the game application in some scenarios. Therefore, in the method for managing a game provided in an embodiment of the disclosure, a dynamic identification capacity of a game service application (which may be specifically a dynamic identification capacity of a game application of a dynamic identification module) may be borrowed to improve an identification rate of a game engine. In order to achieve the objective, in the method for managing a game provided in an embodiment of the disclosure, a reference interface is newly added between a game engine and a dynamic identification module of a game service application. Through the reference interface, the dynamic identification module may refer to feature information (such as an IWare feature) of a current application from the game engine, and then dynamically identify, based on the features, whether the current application is a game application. Optionally, through the reference interface, the game engine may also query the dynamic identification module for information of a plurality of games pre-acquired by the dynamic identification module. It should be understood that in the above two methods, the former is used to dynamically identify the game application mainly by using the dynamic identification module as an execution body. The latter is used to identify a game application mainly by using a game engine as an execution body. A method that the dynamic identification module is mainly used to dynamically identify the game application will be introduced in the following embodiments of the disclosure.

It should be noted that a process of identifying a game application in an embodiment of the disclosure may be applied to a plurality of scenarios, such as a scenario that a terminal device newly downloads an application, a scenario in which a terminal device newly installs an application, before a user enters an application, or when a user performs an application, etc.

The dynamic identification module may identify the game application through a plurality of methods. For example, in some embodiments, after acquiring the IWare feature transmitted by the game engine, the dynamic identification module may compare the IWare feature with the game information acquired from the game center cloud. If the IWare feature is consistent with the game information, an application corresponding to the IWare may be identified as an application of a message type.

For another example, in some other embodiments, the dynamic identification module may further pre-acquire an identification feature corresponding to the game. The identification feature may be a common feature of the game application extracted based on features of a large number of game applications, and may be used as an identifier of the game application. After acquiring the IWare feature transmitted by the game engine, the dynamic identification module may detect whether the IWare feature satisfies a preset identification feature. If the IWare feature is consistent with one or more identification features, an application corresponding to the IWare may be identified as an application having a message type.

For another example, in some other embodiments, the dynamic identification module may further query, according to a package name and/or an application identifier (such as an application name) of the acquired application data packet, and through package name query and/or application identifier (such as an application name) query, whether the application is consistent with a data packet package name and/or an application identifier (such as an application name) of a game application acquired from the game center cloud. If yes, the application is identified as a game application.

In some embodiments, the game center cloud may store information corresponding to a plurality of game applications. The information may include a package name, an application identifier (such as an application name), etc. corresponding to the game application data package. The game center cloud may acquire the information corresponding to the plurality of game applications through a plurality of methods. For example, the game center cloud may acquire information corresponding to a plurality of games from a third-party marketplace cloud. For another example, the game center cloud may receive game information reported by a plurality of terminal devices, etc., which is not limited in an embodiment of the disclosure.

In some embodiments, after identifying that the application is a game application, the dynamic identification module may deliver the native game to a system service (system service). Then, the system service may install, start, run the game, etc. such that the user can use the application at the terminal device.

In some embodiments, the dynamic identification module (or the game service application) can be triggered to enable game application identification through a plurality of methods, such as: method (1): transmit an application installation broadcast when the terminal device installs an application, and in response to the application installation broadcast, start to perform, by the dynamic identification module, an identification process of the game application. Method (2): set an addition control on the game service application; when a to-be-added game application exists (for example, a game application newly downloaded exists on the terminal device), click on, by a user, the addition control; and in response to a click-on operation by the user, start to perform, by a dynamic identification module in the game service application, an identification process of the game application. Method (3): when the terminal device is turned on, transmit a start-up broadcast; and in response to the start-up broadcast, start to perform, by the dynamic identification module, an identification process of the game application. Optionally, when the terminal device is enabled, enable the dynamic identification module to continuously exist in an identification process of the game application, for example, periodically identify the game application.

Optionally, different from trigger method (2) and trigger method (3) mentioned above, in trigger method (1) mentioned above, the dynamic identification module may mainly identify a game application from existing applications in the terminal device. After the game application is identified, the dynamic identification module may further generate a game list. However, trigger method (2) and trigger method (3) mentioned above may be configured for game application identification only for a specific application to be installed or uninstalled. That is, identification methods of trigger method (2) and trigger method (3) mentioned above are more targeted, and not all applications of the terminal device are required to be identified.

As a specific example, a process of game application identification may include: when the terminal device powers on, transmit a start-up broadcast; and after the game service application (for example, specifically a dynamic identification module in the game service application) receives a start-up broadcast, scan a native application, identify or match a game application from the applications, and generate a game list. Then, synchronize, by the game service application, the game list to the cloud (such as a game center cloud), or cache the game list to a local database (such as a native game library). Then, synchronize, by the game service application, the game application list to system_server. In a subsequent usage process of the terminal device, the game service application may listen to an application installation and/or uninstallation broadcast. When a corresponding broadcast is received, whether the installed and/or uninstalled application is a game application is determined. If yes, an interface is called to synchronize the application to system_server. When the user starts an application, system_server determines whether the application is a game application (for example, determines whether the application is an application in a game list). If yes, a game service application is started.

It should be noted that the three trigger methods introduced above are merely examples. During actual application, the dynamic identification module may be triggered to identify the game application through more other methods, which is not limited in an embodiment of the disclosure.

According to the method for managing a game provided in an embodiment of the disclosure, before the user enters the game or when the user enters the game, a game application is dynamically identified based on the pre-acquired game information and the feature of the game application such that whether a current application is the game application can be accurately determined. Further, subsequently, a game service application can be started for the game application, a covert entrance in the game can be provided, and game usage experience of the user can be improved.

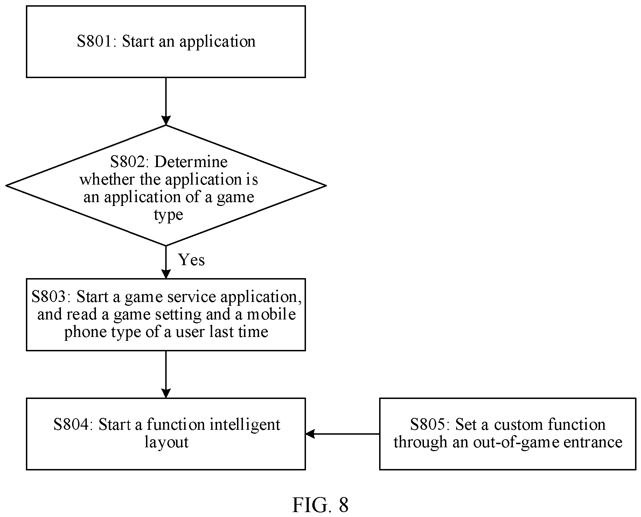

For example, as shown in FIG. 8, a schematic flow diagram of another method for managing a game according to an embodiment of the disclosure is shown. The execution body of the flow may be the terminal device introduced in FIG. 1 or FIG. 2 mentioned above, and may specifically include steps as follows:
S801: Start an application.
S802. Determine whether the application is a game application.

In some embodiments, in response to starting an application in S801, the terminal device may identify whether a currently started application is a game application. A specific method through which the terminal device identifies whether the application is a game application will be specifically introduced in detail below, and will not be described in detail herein.

In some embodiments, if the enabled application is a game application (that is, the determination result in S802 is "yes"), S803 may be performed next. For ease of description, a game application currently started is denoted as a game application A.

S803: Start a game service application, and read a game setting and mobile phone type of the user last time.

In some embodiments, in response to determining that the started application is a game application, the terminal device may start a game service application. The terminal device can starts the game service application through a plurality of methods. For example, the terminal device may automatically start the game service application. For another example, the terminal device may remind the user of authorizing the terminal device to start the game service application. For another example, the terminal device may remind the user of manually starting a game service application, etc., which is not limited in an embodiment of the disclosure.

In some embodiments, after the game service application is started, a setting corresponding to the game application A stored by the terminal device when the user exists the game application A last time can be read.

In some embodiments, the game service application may also read the type of the terminal device. For example, different types may correspond to different functions. The game service application may pre-acquire a corresponding relationship between different types and functions supported thereby. After the type of the terminal device is acquired, the game service application may acquire the functions supported by the terminal device according to the type and the corresponding relationship between the types and the functions.

For example, a corresponding relationship between a type and a function supported thereby may be obtained with reference to Table 1 above.

S804: Start a function intelligent layout.

In some embodiments, after the game service application identifies the type of the terminal device and acquires the function supported by the terminal device, an intelligent layout may be performed on the function of the setting card in the game interface based on the function supported by the terminal device. For example, assuming that the type of the terminal device is type 1, functions supported by the terminal device include network acceleration, display enhancement, unintended activation prevention, game filters, etc. In this case, game functions corresponding to the setting card may be as shown in FIG. 6A, including network acceleration, unintended activation prevention, display enhancement, game filters, etc. For another example, assuming that the type of the terminal device is type 2, functions supported by the terminal device include network acceleration, unintended activation prevention, game filters, etc., and do not include display enhancement. In this case, game functions corresponding to a setting card may be as shown in FIG. 6B, including network acceleration, unintended activation prevention, game filters, etc., but not including display enhancement. Moreover, positions corresponding to the functions implement an intelligent layout. Specifically, positions corresponding to other functions (such as game filters, power station and screen shot) after an original position (such as the position shown in FIG. 6A) of the display enhancement are moved forwards in sequence, for example, moved forwards in sequence in a "Z" shape. In this case, the functions displayed in the setting card are all functions supported by the terminal device.

In some embodiments, the user may set functions through a setting entrance in a game, for example, enable a function in the game application A or disable a function in the game application A by means of a setting card in the game. A function setting made by a user through the in-game setting card may be synchronized to an out-of-game setting entrance, for example, synchronized to a game service application. Thus, an enable state of the function in the out-of-game game service application is consistent with an enable state of the function of the in-game setting card.

S805: Set a custom function through an out-of-game entrance.

In some embodiments, the user may further perform a function setting on the game application A through an out-of-game entrance (such as the game service application), for example, enable a function in the game application A or disable a function in the game application A. These function settings may be synchronized to a setting card in the game, such that an enabling state of the function in the setting card of the game entrance is maintained consistent with an enabling state of the function in the game service application.

According to the method for managing a game provided in an embodiment of the disclosure, an adaptive layout is performed on a function configuration chart of a game based on a function actually supported by a terminal device such that a situation that a user cannot enable a function in different types can be prevented, and a better function arrangement can be always maintained compared with a fixed layout.

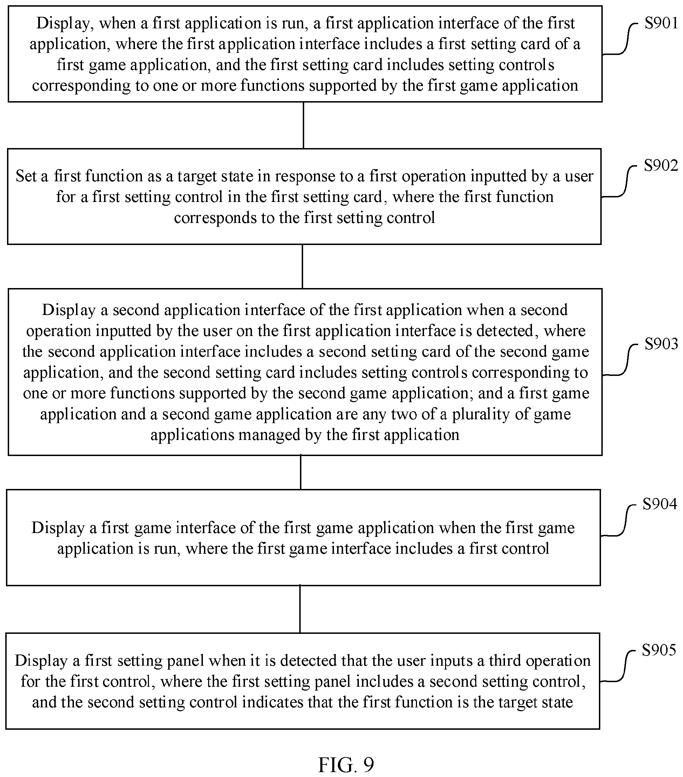

For example, as shown in FIG. 9, a schematic flow diagram of still another method for managing a game according to an embodiment of the disclosure is shown. The process may be performed by the terminal device shown in FIG. 1 or FIG. 2 as a body, and may specifically include steps as follows:
S901: Display, when a first application is run, a first application interface of the first application, where the first application interface includes a first setting card of a first game application, and the first setting card includes setting controls corresponding to one or more functions supported by the first game application.

The first application may correspond to the game service application introduced above. The first game application may correspond to, for example, the game A introduced above.

S902: Set a first function as a target state in response to a first operation inputted by a user for a first setting control in the first setting card, where the first function corresponds to the first setting control.

The target state may include, for example, a function-on state or a function-off state.

S903: Display a second application interface of the first application when a second operation inputted by the user on the first application interface is detected, where the second application interface includes a second setting card of the second game application, and the second setting card includes setting controls corresponding to one or more functions supported by the second game application. The first game application and the second game application are any two of a plurality of game applications managed by the first application.

S904. Display a first game interface of the first game application when the first game application is run, where the first game interface includes a first control.
The first game interface may correspond to, for example, the interface shown in FIG. 4A.

The first control may correspond to, for example, the control 401 (that is, the suspended ball) shown in FIG. 4A.

S905: Display a first setting panel when it is detected that the user enters a third operation for the first control, where the first setting panel includes a second setting control, and the second setting control indicates that the first function is the target state.

The first setting panel may correspond to, for example, the setting panel 403 shown in FIG. 4C.

In some embodiments, one or more functions corresponding to the first game application are different from one or more functions corresponding to the second game application.

In some embodiments, when the second game application is run, a second game interface of the second game application is displayed. The second game interface includes the first control. A second setting panel is displayed when it is detected that the user enters a fourth operation for the first control. A type of a setting control included in the second setting panel is different from a type of a setting control included in the first setting panel.

In some embodiments, the method further includes: identify, when a first trigger event is acquired, that the first game application is an application of a game type, where the first game application is associated with the first trigger event; and add the first game application to the first application.

In some embodiments, the first control is a suspended ball.

In some embodiments, the method further includes: traverse, when a second trigger event is acquired, a plurality of applications included in the terminal device, and identify an application of a game type from the plurality of applications; generate a game list according to the application of the game type of the plurality of applications; and run a first game in a case that the first game is detected on the game list.

In some embodiments, the first application interface further includes a game display card corresponding to the first game application, and the second application interface further includes a game display card corresponding to a second game. When the first application includes a plurality of game display cards corresponding to the plurality of game applications respectively, the method further includes: switch, in response to a fifth operation input by the user, an application interface including different game display cards until the second application interface is displayed; or display, in response to a sixth operation input by the user, the different game display cards in sequence in a preset form until the game display card corresponding to the second game application is displayed.

In some embodiments, the fifth operation or the sixth operation includes any one of: a slide-left operation, a slide-right operation, a slide-up operation and a slide-down operation.

In some embodiments, the method further includes: display the first setting card when a seventh operation input by the user is detected.

In some embodiments, the game display card further includes a one-click installation control corresponding to a game.

In some embodiments, the method further includes: synchronize, when the user sets the first function of the first game application as the target state in the first application, the target state of the first function to the second setting control in the first setting panel, and indicate, by the second setting control, that the first function is the target state.

In some embodiments, the method further includes: synchronize, when the user sets a second function of the first game by means of the first setting panel and acquires a target state of the second function, the target state of the second function to the first setting control included in a setting card, and indicate, by the first setting control, that the first function is the target state.

In some embodiments, the method further includes: determine, when the first game application is run again, that a function state indicated by one or more setting controls included in the re-displayed first setting panel is consistent with a function state when the first game application is exited last time.

In some embodiments, the method further includes: read the type of the terminal device, where different types and functions have a corresponding relationship; acquire, according to the type of the terminal device and the corresponding relationship, that the terminal device does not support a third function; delete, in a case that a setting panel includes the third function, a setting control corresponding to the third function from the setting panel; and move forwards, in sequence, positions of setting controls corresponding to other functions behind a position of the setting control corresponding to the third function.

In some embodiments, the method further includes: acquire first game information corresponding to a plurality of games from a cloud server, where the first game information includes one or more of data packet names corresponding to the plurality of games, identifiers of the games, and features of the games; acquire second game information corresponding to a native game in the terminal device, where the second game information includes one or more of a data packet name corresponding to the native game, an identifier of the game, and a feature of the game; detect, when the first trigger event is acquired, whether information corresponding to the first application conforms to the first game information and/or the second game information; and identify, if yes, that the first game is a game application.

In some embodiments, the method further includes: acquire a preset identification feature, where the identification feature is used to identify the application of the game type; detect, when the first trigger event is acquired, whether the information corresponding to the first game includes the identification feature; and identify, if yes, that the first game is the game application.

In some embodiments, the method further includes: enable a game application identification function when the second trigger event is acquired.

In some embodiments, the second trigger event includes: the terminal device starts up, and a start-up broadcast is received; an enabling operation inputted by the user for a switch control corresponding to a game identification function is received; or a new application is installed on the terminal device, and an application installation broadcast is received.

In some embodiments, the first trigger event is that the first application is installed or the first application is downloaded.

According to the method for managing a game provided in an embodiment of the disclosure, by designing a game service application having dynamic game identification, double-entrance centralized management and intelligent function layout functions, a user can centrally manage and set a native game at an out-of-game entrance, and support a personalized setting of a single game. When a user enters a game, after dynamically identifying a game application, a background will start a game service application, and a hidden entrance such as a suspended ball folded on one side of a page may be set in the game interface. In the game, function panels of the game service application will be intelligently arranged according to a last setting of the user and a type of the terminal device, so as to provide the user with a function layout more satisfying requirements, and create rapid, convenient and uninterrupted usage experience.

Based on the same technical concept, an embodiment of the disclosure further provides a terminal device. The terminal device includes: one or more processors; and one or more memories. The one or more memories store one or more computer programs. The one or more computer programs include instructions. When executed by the one or more processors, the instructions cause a computer or processors to execute one or more steps of any one of the above methods.

Based on the same technical concept, an embodiment of the disclosure further provides a computer-readable storage medium. The computer-readable storage medium stores computer-executable program instructions. When run on a computer, the computer-executable program instructions cause a computer or processors to perform one or more steps of any one of the above methods.

Based on the same technical concept, an embodiment of the disclosure further provide a computer program product including instructions. The computer program product includes a computer program code. When run on a computer, the computer program code causes a computer or processors to perform one or more steps of any one of the above methods.

All or some of the above embodiments may be implemented by using software, hardware, firmware, or their combinations. In a case that software is configured for implementation, implementation may be entirely or partially performed in a form of a computer program product. The computer program product includes one or more computer instructions. When the computer program instructions are loaded and executed on a computer, all or some of flows or functions according to embodiments of the disclosure are generated. The computer may be a general-purpose computer, a dedicated computer, a computer network, or other programmable apparatuses. The computer instructions may be stored in a computer-readable storage medium, or transmitted by means of the computer-readable storage medium. For example, the computer instructions may be transmitted from a website, a computer, a server, or a data center to another website, computer, server, or data center in a wired manner (for example, by means of a coaxial cable, an optical fiber, or a digital subscriber line) or a wireless manner (for example, by means of infrared rays, radio, or microwaves). The computer-readable storage medium may be any available medium that can be accessed by the computer, or a data storage device, such as a server or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), etc.

Those of ordinary skill in the art can understand that all or some flows of the methods in the above embodiments may be implemented by using a computer program instructing related hardware. The program may be stored in a computer-readable storage medium. When this program is executed, flows of all above method embodiments can be included. The storage medium includes: any medium that can store program code, such as an ROM, an RAM, a magnetic disk, or an optical disc.

The above implementations are merely particular implementations of embodiments of the disclosure, but the scope of protection of the embodiments of the disclosure is not limited thereto. Any variations or substitutions within the technical scope disclosed in the embodiments of the disclosure shall fall within the scope of protection of the embodiments of the disclosure. Therefore, the scope of protection of embodiments of the disclosure shall be subject to the scope of protection of the claims.

## Claims

1. A method for managing a game, applied to a terminal device, comprising:
displaying, when a first application is run, a first application interface of the first application, wherein the first application interface comprises a first setting card of a first game application, and the first setting card comprises setting controls corresponding to one or more functions supported by the first game application;
setting a first function as a target state in response to a first operation inputted by a user for a first setting control in the first setting card, wherein the first function corresponds to the first setting control;
displaying a second application interface of the first application when a second operation inputted by the user on the first application interface is detected, wherein the second application interface comprises a second setting card of the second game application, and the second setting card comprises setting controls corresponding to one or more functions supported by the second game application; wherein the first game application and the second game application are any two of a plurality of game applications managed by the first application;
displaying a first game interface of the first game application when the first game application is run, wherein the first game interface comprises a first control; and
displaying a first setting panel when it is detected that the user enters a third operation for the first control, wherein the first setting panel comprises a second setting control, and the second setting control indicates that the first function is the target state.

2. The method according to claim 1, further comprising:
displaying a second game interface of the second game application when the second game application is run, wherein the second game interface comprises the first control; and
displaying a second setting panel when it is detected that the user enters a fourth operation for the first control, wherein a type of a setting control comprised in the second setting panel is different from a type of a setting control comprised in the first setting panel.

3. The method according to claim 1 or 2, further comprising:
identifying, when a first trigger event is acquired, that the first game application is an application of a game type, wherein the first game application is associated with the first trigger event; and
adding the first game application to the first application.

4. The method according to any one of claims 1-3, wherein the first control is a suspended ball.

5. The method according to any one of claims 1-4, further comprising:
traversing, when a second trigger event is acquired, a plurality of applications comprised in the terminal device, and identifying an application of a game type from the plurality of applications; and
generating a game list according to the application of the game type of the plurality of applications; and
running a first game in a case that the first game application is detected on the game list.

6. The method according to any one of claims 1-5, wherein the first application interface further comprises a game display card corresponding to the first game application, and the second application interface further comprises a game display card corresponding to a second game; and when the first application comprises a plurality of game display cards corresponding to the plurality of game applications respectively, the method further comprises:
switching, in response to a fifth operation input by the user, an application interface comprising different game display cards until the second application interface is displayed; or
displaying, in response to a sixth operation input by the user, the different game display cards in sequence in a preset form until the game display card corresponding to the second game application is displayed.

7. The method according to claim 6, wherein the fifth operation or the sixth operation comprises any one of:
a slide-left operation, a slide-right operation, a slide-up operation and a slide-down operation.

8. The method according to claim 6 or 7, further comprising:
displaying the first setting card when a seventh operation input by the user is detected.

9. The method according to any one of claims 6-8, wherein the game display card further comprises a one-click installation control corresponding to a game.

10. The method according to any one of claims 1-9, further comprising:
synchronizing, when the user sets the first function of the first game as the target state in the first application, the target state of the first function to the second setting control in the first setting panel, and indicating by the second setting control that the first function is the target state.

11. The method according to any one of claims 1-9, further comprising:
synchronizing, when the user sets a second function of the first game application by means of the first setting panel and acquires a target state of the second function, the target state of the second function to the first setting control comprised in a setting card, and indicating by the first setting control that the first function is the target state.

12. The method according to any one of claims 1-11, further comprising:
determining, when the first game application is run again, that a function state indicated by one or more setting controls comprised in the re-displayed first setting panel is consistent with a function state when the first game application is exited last time.

13. The method according to any one of claims 1-12, further comprising:
read the type of the terminal device, where different types and functions have a corresponding relationship;
acquire, according to the type of the terminal device and the corresponding relationship, that the terminal device does not support a third function;
deleting, in a case that a setting panel comprises the third function, a setting control corresponding to the third function from the setting panel; and
moving forwards, in sequence, positions of setting controls corresponding to other functions behind a position of the setting control corresponding to the third function.

14. The method according to any one of claims 3-13, further comprising:
acquiring first game information corresponding to a plurality of games from a cloud server, wherein the first game information comprises one or more of data packet names corresponding to the plurality of games, identifiers of the games, and features of the games;
acquiring second game information corresponding to a native game in the terminal device, wherein the second game information comprises one or more of a data packet name corresponding to the native game, an identifier of the game, and a feature of the game;
detecting, when the first trigger event is acquired, whether information corresponding to the first application conforms to the first game information and/or the second game information; and
identifying, if yes, that the first game is a game application.

15. The method according to any one of claims 1-14, further comprising:
acquiring a preset identification feature, wherein the identification feature is used to identify the application of the game type;
detecting, when the first trigger event is acquired, whether the information corresponding to the first game comprises the identification feature; and
identifying, if yes, that the first game is the game application.

16. The method according to any one of claims 5-15, further comprising:
enabling a game application identification function when the second trigger event is acquired.

17. The method according to claim 16, wherein the second trigger event comprises:
the terminal device starts up, and a start-up broadcast is received; or
an enabling operation inputted by the user for a switch control corresponding to a game identification function is received; or
a new application is installed on the terminal device, and an application installation broadcast is received.

18. The method according to any one of claims 1-17, wherein the first trigger event is that the first application is installed or the first application is downloaded.

19. A terminal device, comprising:
one or more processors; and
one or more memories; wherein
the one or more memories store one or more computer programs, the one or more computer programs comprise instructions, and when executed by the one or more processors, the instructions cause the terminal device to perform a method according to any one of claims 1-18.

20. A computer-readable storage medium, storing computer-executable program instructions, wherein when run on a computer, the computer-executable program instructions cause the computer to perform the method according to any one of claims 1-18.
